# EUROPEAN PATENT APPLICATION

(11) **EP 4 641 098 A1**
(43) Date of publication of application: **29.10.2025**
(21) Application number: 23907019.6
(22) Date of filing: 19.12.2023
(51) Int. Cl.: F24F 1/0007, F24F 11/46, F24F 13/22, F28D 5/02

(54) **AIR CONDITIONER**

(30) Priority: 22.12.2022 JP 2022205873; 22.12.2022 JP 2022205874
(71) Applicant: BROTHER KOGYO KABUSHIKI KAISHA, Nagoya-shi, Aichi 467-8561 (JP)
(72) Inventor: OCHIAI, Yusuke, Nagoya-shi, Aichi 467-8562 (JP); SAKANO, Yuji, Nagoya-shi, Aichi 467-8562 (JP); YOSHIDA, Shigeki, Nagoya-shi, Aichi 467-8562 (JP); MATSUMOTO, Daiki, Nagoya-shi, Aichi 467-8562 (JP); SATO, Ryosuke, Nagoya-shi, Aichi 467-8562 (JP); MIKI, Katsuki, Nagoya-shi, Aichi 467-8562 (JP); AKATSUKA, Kazuo, Nagoya-shi, Aichi 467-8562 (JP); SAKAKURA, Nobuaki, Nagoya-shi, Aichi 467-8562 (JP)
(74) Representative: J A Kemp LLP
(86) International application number: PCT/JP2023/045431
(87) International publication number: WO 2024/135659

(57) **Abstract**

An air conditioning device capable of suppressing power consumption during operation from a standpoint of the power consumption of the supply air fan and the exhaust air fan is provided. The air conditioning device includes: a sensible heat exchanger having a supply air path that forms part of a supply air passage and an exhaust air path that forms part of an exhaust air passage; a water supply unit that supplies water to the exhaust air path of the sensible heat exchanger; a first pump that supplies water to the water supply unit via a supply water passage; a supply air fan disposed in the supply air passage; and an exhaust air fan disposed in the exhaust air passage and operating with lower power consumption than the supply air fan.

## Description

### TECHNICAL FIELD

The present invention relates to an air conditioning device.

### BACKGROUND

An evaporative cooling-type air conditioning device, which is configured to intake indoor air, utilize latent heat of water evaporation to lower the ambient temperature, and then blow the cooled air back into a room, is known. Such a device is disclosed, for example, in Patent Document 1. In the air conditioning device described in Patent Document 1, the air flowing through a second air flow passage passes through multiple tubes of a sensible heat exchanger, while the air flowing through a first air flow passage passes around the multiple tubes. As a result, heat exchange occurs between the air in the second air flow passage and the air in the first air flow passage.

### PRIOR ART DOCUMENT

### PATENT DOCUMENT

Patent Document 1: Japanese Unexamined Patent Publication No. 2014-092338

### SUMMARY OF THE INVENTION

### PROBLEMS TO BE SOLVED BY THE INVENTION

However, in the air conditioning device of Patent Document 1, considerations regarding, for example, a supply air fan and an exhaust air fan have not been made.

The present invention has been made in view of such circumstances and aims to provide a novel and useful air conditioning-related product.

### MEANS FOR SOLVING THE PROBLEM

An air conditioning device according to one aspect of the present disclosure includes a sensible heat exchanger having a supply air path that forms part of a supply air flow passage and an exhaust air path that forms part of an exhaust air flow passage, a water supply unit that is configured to supply water to the exhaust air path of the sensible heat exchanger, a first pump that is configured to supply water to the water supply unit via a supply water passage, a supply air fan disposed in the supply air flow passage, and an exhaust air fan disposed in the exhaust air flow passage, which operates with lower power consumption than the supply air fan.

### EFFECTS OF THE INVENTION

A device capable of suppressing power consumption during operation, from the perspective of the power consumption of the supply air fan and the exhaust air fan, can be provided.

### BRIEF DESCRIPTION OF THE DRAWINGS

FIG. 1 is a schematic side sectional view showing an example configuration of an air conditioning device according to an embodiment.
FIG. 2 is a perspective view showing the external appearance of the air conditioning device.
FIG. 3 is a front view showing the front appearance of the air conditioning device with the water supply tank removed.
FIG. 4 is a plan view showing the front appearance of the air conditioning device with the water supply tank removed.
FIG. 5 is a perspective view showing the external appearance of the water supply tank.
FIG. 6 is an explanatory diagram showing a restriction structure that regulates the attachment and detachment of the water supply tank to and from the housing.
FIG. 7 is a schematic perspective view showing an example configuration of a sensible heat exchanger.
FIG. 8 is an explanatory diagram showing the state in which the spacer of the sensible heat exchanger is exposed.
FIG. 9 is an explanatory diagram showing the airflow of supply air and exhaust air inside the air conditioning device.
FIG. 10 is an explanatory diagram showing an example of a QP characteristic diagram representing the airflow rate and pressure loss values.
FIG. 11 is an enlarged explanatory diagram of a part of the exhaust air flow passage downstream of the drain pan.
FIG. 12 is a perspective view showing the external appearance of the suppression plate.
FIG. 13 is an explanatory diagram showing the rotation of the drainage lever.
FIG. 14 is an explanatory diagram showing the attachment and detachment of the inline filter.
FIG. 15 is a schematic side sectional view showing the fitted state of the inline filter and the filter case.
FIG. 16 is a block diagram showing the functional components of the air conditioning device.
FIG. 17 is a flowchart showing a process executed by the controller mounted on the circuit board.
FIG. 18 is a perspective view showing the external appearance of the heat exchange case.
FIG. 19 is a front view showing the external appearance of the heat exchange case.
FIG. 20 is a left side view showing the external appearance of the heat exchange case.
FIG. 21 is a right side view showing the external appearance of the heat exchange case.
FIG. 22 is a rear view showing the external appearance of the heat exchange case.
FIG. 23 is a plan view showing the external appearance of the heat exchange case.
FIG. 24 is a bottom view showing the external appearance of the heat exchange case.
FIG. 25 is a side sectional view showing the external appearance of the suppression plate according to Modification 1.
FIG. 26 is a side sectional view showing the external appearance of the suppression plate according to Modification 2.

### EMBODIMENTS FOR CARRYING OUT THE INVENTION

An air conditioning device 1 and other components according to an embodiment of the present disclosure will be described with reference to the drawings. It should be noted that the present disclosure is not limited to the following examples, but includes all equivalents to and modifications within the scope of the claims.

### First Embodiment

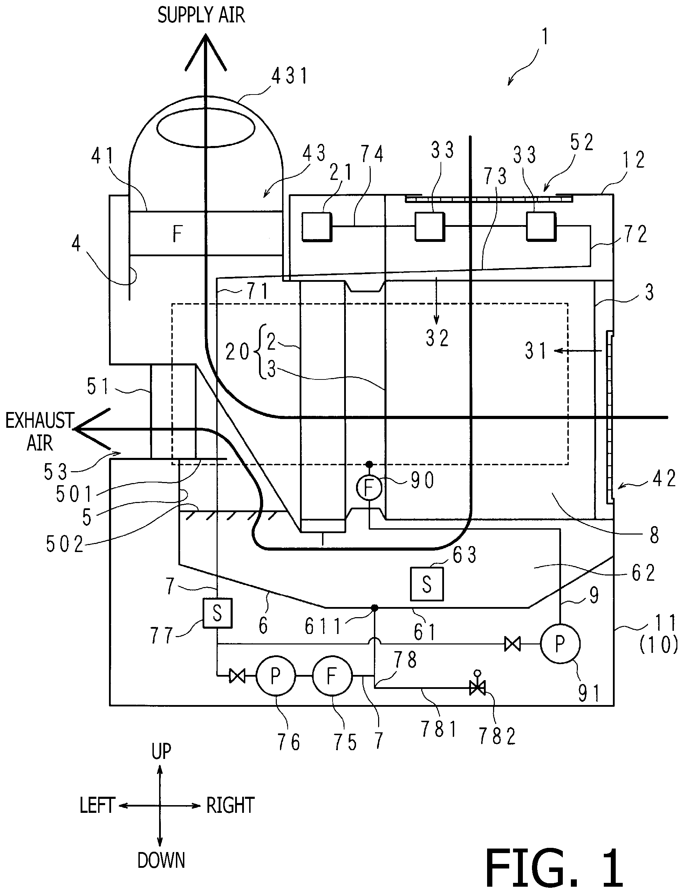

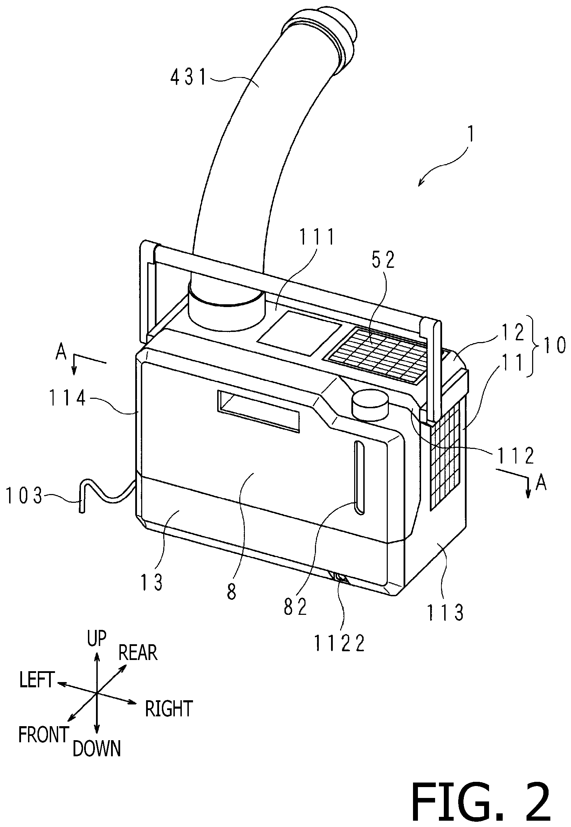

Hereinafter, embodiments will be described with reference to the drawings. FIG. 1 is a schematic side sectional view showing an example configuration of an air conditioning device 1 according to the embodiment. FIG. 2 is a perspective view showing an external appearance of the air conditioning device 1. FIG. 1 schematically illustrates, from the front, a sectional view taken along line A-A in FIG. 2. In FIG. 1, an installation state of the air conditioning device 1 is assumed to be its normal usage state, with directions of up, down, left, and right indicated. In FIG. 2, the installation state of the air conditioning device 1 is also assumed to be its normal usage state, with the directions of up, down, front, back, left, and right indicated. In the present embodiment, the vertical direction refers to an up-down direction, a first horizontal direction refers to a left-right direction, and a second horizontal direction refers to a front-back direction.

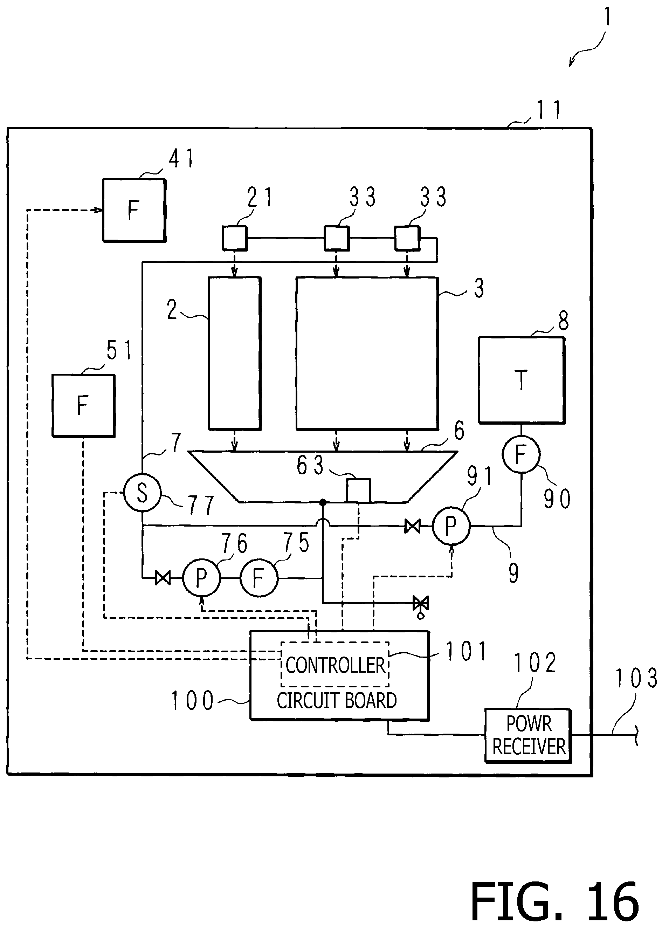

The air conditioning device 1 is configured to be mounted on vehicles such as forklifts, trucks, commercial vehicles, towing vehicles, aerial work platforms, mini excavators, and golf carts. The air conditioning device 1 includes a box-shaped housing 10 and is electrically connected to a power supplier, such as a battery terminal of the vehicle, via a cable 103 extending from an outer surface of the housing 10. The cable 103 is connected to a power receiver 102 provided inside the housing 10 (see FIG. 16). In this way, the air conditioning device 1 receives power supplied from the vehicle battery via the cable 103 and the like, and operates to cool a surrounding space of a vehicle operator as a conditioned space. When the air conditioning device 1 is mounted on a mobile vehicle such as a forklift, the power supply of the air conditioning device 1 may be turned on and off in conjunction with the on and off operation of a key switch of the forklift engine. That is, turning on the engine of the forklift may turn on the power supply of the air conditioning device 1, and turning off the engine of the forklift may turn off the power supply of the air conditioning device 1. Alternatively, a power switch may be provided on the housing 10 of the air conditioning device 1, allowing the power supply of the air conditioning device 1 to be turned on and off in response to an operator's operation of pressing or otherwise manipulating the power switch.

It should be noted that the air conditioning device 1 may also be placed indoors, such as in a factory. In such a case, the air conditioning device 1 may be driven using power supplied from a commercial power source after conversion by an AC/DC adapter, or using power supplied from a secondary battery, such as a lithium-ion battery, which may be housed in the housing 10. It should also be noted that the secondary battery or other power sources may alternatively be provided outside the housing 10.

The housing 10 is formed as a rectangular box made of resin or metal and includes a main body 11 and a door 12 that is openable and closable with respect to the main body 11. The housing 10, forming a box, has an upper surface, a lower surface, and side walls. The side walls include a first side wall 111, a second side wall 112, a third side wall 113, and a fourth side wall 114. In the present embodiment, the first side wall 111 serves as a rear side wall, the second side wall 112 serves as a front side wall, the third side wall 113 serves as a right side wall, and the fourth side wall 114 serves as a left side wall. Thus, the first side wall 111 and the second side wall 112 face each other, while the third side wall 113 and the fourth side wall 114 also face each other. The third side wall 113 connects the first side wall 111 and the second side wall 112, and the fourth side wall 114 connects the first side wall 111 and the second side wall 112. The first side wall 111 includes a body-side first side wall 111 on the main body 11 side and a door-side first side wall 111 on the door 12 side.

The door 12 is located above the main body 11 and is configured to be openable and closable with respect to the main body 11. Specifically, the body-side first side wall 1112 is connected to the door-side first side wall 1111 by two support sections. The support sections may be implemented using hinges, for example.

The housing 10 is provided with a handle that the user can grasp when carrying the air conditioning device 1. The handle may, for example, have a U-shape, with both ends of the U-shaped handle being respectively rotatably attached to the third side wall 113 and the fourth side wall 114. Alternatively, the housing 10 may be provided with a shoulder strap that the user can utilize when carrying the air conditioning device 1.

A duct 431 for blowing out supply air is arranged on an upper surface of the housing 10. A water supply tank 8 is located beside the second side wall 112 of the housing 10. A tank base section 13 is defined at a lower part of the second side wall 112 of the housing 10 for supporting the water supply tank 8. The water supply tank 8 is placed on a mounting surface 131, which is an upper surface of the tank base section 13, thereby covering the second side wall 112.

At a lower part of the tank base section 13, a drainage port 1122 is provided for draining water from a drain pan 6, which will be described later. The drainage port 1122 serves as an end of a drainage passage 781, which will also be described later. A drainage valve 782, which includes an opening and closing mechanism, is arranged in the drainage passage 781.

The water supply tank 8 is detachably fitted to the housing 10. The water supply tank 8 includes a handle section 801, which forms part of a restriction structure 80 that will be described later. By operating the handle section 801, the user can detach the water supply tank 8 from the housing 10. When water is to be refilled into the water supply tank 8, the user can carry only the water supply tank 8 to a faucet, thereby reducing the workload on the user when refilling water. A vertically elongated water level inspection window 82 is provided on a side surface of the water supply tank 8. The user can visually check the remaining amount of water in the water supply tank 8 through the water level inspection window 82.

The housing 10 is formed with a supply air intake port 42 and an exhaust air intake port 52 for drawing in air from the conditioned space. Additionally, the housing 10 is formed with a supply air outlet port 43 and an exhaust air outlet port 53. The supply air intake port 42 is formed in the third side wall 113 of the housing 10. The exhaust air intake port 52 is formed in the door 12, which constitutes a part of the housing 10. The supply air outlet port 43 is formed on the upper surface of the housing 10 and is connected to a duct 431. The duct 431 is configured to be rotatable in the circumferential direction of the supply air outlet port 43 and may include an airflow direction adjustment plate for adjusting the direction of supply air blown from the duct 431. The exhaust air outlet port 53 is formed in the fourth side wall 114 of the housing 10.

The air conditioning device 1 includes a water supply tank 8 for storing water and a cooling unit 20, which includes an evaporation filter 2 and a sensible heat exchanger 3, both of which are configured to be supplied with water from the water supply tank 8. The evaporation filter 2 is housed in an evaporation filter case. The sensible heat exchanger 3 is housed in a heat exchange case 34. The evaporation filter 2 is configured to lower the ambient temperature and cool the conditioned space by utilizing the latent heat of evaporation of the water supplied from the water supply tank 8. The sensible heat exchanger 3 is configured to lower the ambient temperature and cool the conditioned space by utilizing both the sensible heat and latent heat of the water supplied from the water supply tank 8. The sensible heat exchanger 3 is an example of a heat exchanger. The evaporation filter 2 is arranged downstream of the sensible heat exchanger 3 in the direction of the supply airflow. That is, the evaporation filter 2 is located between the sensible heat exchanger 3 and the supply air outlet port 43.

The air that passes through the sensible heat exchanger 3 and the evaporation filter 2 and is cooled in two stages by the sensible heat exchanger 3 and the evaporation filter 2 is blown out from the supply air outlet port 43 as supply air into the conditioned space. Additionally, as the air passes through the sensible heat exchanger 3, the air is cooled by the water supplied to the sensible heat exchanger 3, and then the air that has undergone sensible heat exchange with the supply air in the sensible heat exchanger 3 is discharged from the exhaust air outlet port 53 to the outside of the air conditioning device 1 as exhaust air.

The supply air intake port 42 and the supply air outlet port 43 are in communication with each other, forming a supply air flow passage 4 through which the supply air flows, with the supply air intake port 42 serving as an inlet for supply air and the supply air outlet port 43 serving as an outlet for supply air. That is, the supply air flows into the supply air flow passage 4 through the supply air intake port 42 and flows out through the supply air outlet port 43. A dust collection filter for supply air, which captures dust from the supply air drawn in through the supply air intake port 42, may be provided at the supply air intake port 42.

The exhaust air intake port 52 and the exhaust air outlet port 53 are in communication with each other, forming an exhaust air flow passage 5 through which the exhaust air flows, with the exhaust air intake port 52 serving as an inlet for exhaust air and the exhaust air outlet port 53 serving as an outlet for exhaust air. That is, the exhaust air flows into the exhaust air flow passage 5 through the exhaust air intake port 52 and flows out through the exhaust air outlet port 53. An exhaust dust collection filter, which captures dust from the exhaust air drawn in through the exhaust air intake port 52, may be provided at the exhaust air intake port 52.

The air conditioning device 1 includes fans for conveying the supply air and the exhaust air. The fans include a supply air fan 41 for conveying the supply air and an exhaust air fan 51 for conveying the exhaust air. The supply air fan 41 and the exhaust air fan 51 may be axial flow fans, such as propeller fans, or sirocco fans. The supply air fan 41 is disposed near the supply air outlet port 43 and is located downstream of the cooling unit 20 in the direction of airflow within the supply air flow passage 4, functioning as an intake fan.

In driving the exhaust air fan 51 and the supply air fan 41, the power consumption of the exhaust air fan 51 is set to be lower than that of the supply air fan 41. In reducing the power consumption of the exhaust air fan 51 relative to that of the supply air fan 41, the rated output of the exhaust air fan 51 may be lower than that of the supply air fan 41. Alternatively, the blade diameter of the exhaust air fan 51 may be smaller than that of the supply air fan 41. Alternatively, the exhaust air fan 51 and the supply air fan 41 may have the same rated output capacity-for example, by using fans of the same model-while differing in the rotational speeds of their respective fan motors, with the rotational speed of the exhaust air fan 51 being set lower than that of the supply air fan 41. In controlling the rotation of the fan motors, the voltage applied to the exhaust air fan 51 may be made lower than the voltage applied to the supply air fan 41 by adjusting the duty ratio or other control signals input to a power device such as an FET that controls the motor current. Alternatively, without changing the value of the applied voltage, the power supplied to the exhaust air fan 51 may be made lower than that supplied to the supply air fan 41 by varying the ratio of the time during which the voltage is applied.

The exhaust air fan 51 is disposed near the exhaust air outlet port 53 and is located downstream of the sensible heat exchanger 3 in the direction of exhaust airflow within the exhaust air flow passage 5, functioning as an intake fan. The supply air fan 41 and the exhaust air fan 51 are not limited to these configurations and may each be either a push-type fan or an intake-type fan. When the supply air fan 41 and the exhaust air fan 51 are configured as push-type fans, the supply air fan 41 is disposed near the supply air intake port 42, and the exhaust air fan 51 is disposed near the exhaust air intake port 52.

The exhaust air transported by the exhaust air fan 51 is drawn in through the exhaust air intake port 52 and then flows into the exhaust air passage 32 of the sensible heat exchanger 3. Since the exhaust air intake port 52 is formed in the door 12, the exhaust air that enters through the exhaust air intake port 52 flows through the interior of the door 12 and then into the exhaust air passage 32 of the sensible heat exchanger 3.

In arranging the exhaust air fan 51 in the exhaust air flow passage 5 near the exhaust air outlet port 53, the exhaust air fan 51 may be located in an offset manner, slightly recessed from the exhaust air outlet port 53. The exhaust air outlet port 53 is provided at the downstream end of the exhaust air flow passage 5, and the exhaust air flow passage 5 at this downstream end may, for example, be linear. The exhaust air fan 51 is arranged in the linear exhaust air flow passage 5 at the downstream end of the exhaust airflow. When referenced from the exhaust air fan 51, a distance from the exhaust air fan 51 to the downstream end of the linear exhaust air flow passage 5 is longer than a distance to the upstream end of the linear exhaust air flow passage 5. By arranging the exhaust air fan 51 apart from the exhaust air outlet port 53, which is the downstream end of the exhaust air flow passage 5, the influence of static electricity from outside the housing 10 on the exhaust air fan 51 can be reduced, thereby ensuring stable operation of the exhaust air fan 51.

In the linear exhaust air flow passage 5 extending from the exhaust air fan 51, a section from the exhaust air fan 51 to an upstream end of the linear exhaust air flow passage 5 is formed by a plate-shaped return section 501. The plate-shaped return section 501, thus configured, is located near the upper end of the drain pan 6 and is arranged to extend in the left-right direction so as to cover part of the opening of the drain pan 6. Upstream of the return section 501 in the direction of exhaust airflow, a suppression plate 502 is arranged. The suppression plate 502 is arranged to cover part of the opening of the drain pan 6. The arrangement and configuration of the return section 501, the suppression plate 502, and the drain pan 6 will be described later.

The sensible heat exchanger 3 is provided with a supply air passage 31 through which supply air flows and an exhaust air passage 32 through which exhaust air flows. That is, the sensible heat exchanger 3 includes the supply air passage 31 and the exhaust air passage 32 . As described above, the air conditioning device 1 is provided with an airflow path including the supply air flow passage 4 through which supply air flows and the exhaust air flow passage 5 through which exhaust air flows. The supply air passage 31 of the sensible heat exchanger 3 constitutes a part of the supply air flow passage 4, and the exhaust air passage 32 of the sensible heat exchanger 3 constitutes a part of the exhaust air flow passage 5.

While details will be described later, the supply air passage 31 and the exhaust air passage 32 in the sensible heat exchanger 3 are configured by alternately stacking multiple membrane members 301 and spacers 302. The spacers 302 adjacent to each other in the stacking direction are arranged with their longitudinal directions rotated 90 degrees relative to each other. The spacers 302 adjacent to each other via the same membrane member 301 intersect with each other, causing the supply air passage 31 and the exhaust air passage 32 to be orthogonal, thereby forming a crossflow between the supply air flowing through the supply air passage 31 and the exhaust air flowing through the exhaust air passage 32.

Through each stacked membrane member 301, sensible heat exchange is performed between the supply air flowing through the supply air passage 31 and the exhaust air flowing through the exhaust air passage 32. The stacking direction of these multiple membrane members 301 is perpendicular to the respective flow directions of the supply air passage 31 and the exhaust air passage 32. That is, in the present embodiment, the flow direction of the supply air passage 31 extends from right to left, while the flow direction of the exhaust air passage 32 extends from top to bottom. In contrast, the stacking direction extends in the front-rear direction, which is perpendicular to both the left-right and up-down directions.

On each of the two opposing side surfaces of the sensible heat exchanger 3, an inlet and an outlet for the supply air passage 31 are formed. In the drawings of the present embodiment, the inlet of the supply air passage 31is located on the right surface of the sensible heat exchanger 3, while the outlet of the supply air passage 31is located on the left surface.

The supply air passage 31is formed by a stacked arrangement of multiple spaces that are configured to communicate from the inlet to the outlet of the supply air passage 31 . An inlet for the exhaust air passage 32 is formed on the upper surface of the sensible heat exchanger 3, while an outlet for the exhaust air passage 32 is formed on the lower surface. The exhaust air passage 32 is formed by a stacked arrangement of multiple spaces that are configured to communicate from the inlet of the exhaust air passage 32 to the outlet of the exhaust air passage 32.

Below the cooling unit 20, namely below the evaporation filter 2 and the sensible heat exchanger 3, a box-shaped drain pan 6 with an opening at the top is arranged. The drain pan 6 is configured to receive water that has been supplied from the heat-exchange water supply unit 33, which will be described later, and has passed through the sensible heat exchanger 3. The drain pan 6 is also configured to receive water supplied from a filter-specific water supply unit 21, which will be described later, after has passed through the evaporation filter 2. The drain pan 6 is arranged with its opening facing the lower surfaces of the evaporation filter 2 and the sensible heat exchanger 3, and is arranged downstream of the sensible heat exchanger 3 in the direction of exhaust airflow. That is, a water storage space inside the drain pan 6 forms part of the exhaust air flow passage 5.

The exhaust air drawn in through the exhaust air intake port 52 by the exhaust air fan 51 and passing through the exhaust air passage 32 of the sensible heat exchanger 3 flows through the water storage space of the box-shaped drain pan 6, which has an open upper surface, and is then discharged from the exhaust air outlet port 53. As the exhaust air passes through the exhaust air passage 32 of the sensible heat exchanger 3, it mixes with the water supplied from the heat-exchange water supply unit 33 to the exhaust air passage 32 . That is, in the exhaust air passage 32 of the sensible heat exchanger 3, the exhaust air and the water flow in the same direction, forming a parallel flow.

In the example illustrated in FIG. 1 of the present embodiment, the supply air passage 31, through which supply air flows, is arranged in a linear manner from the right surface to the left surface of the sensible heat exchanger 3. Downstream of the outlet of the supply air passage 31 in the direction of supply airflow, the evaporation filter 2 is arranged. The evaporation filter 2 is arranged in the supply air flow passage 4 between the sensible heat exchanger 3 and the supply air outlet port 43.

The evaporation filter 2 is arranged such that one rectangular surface faces the left surface of the sensible heat exchanger 3, where the outlet of the supply air passage 31 is formed. In this manner, the evaporation filter 2 functions as a cooling element or an evaporation element. The evaporation filter 2 is made of a nonwoven fabric formed, for example, from rayon or polyester. A filter-specific water supply unit 21, which is a water supply unit for supplying water to the evaporation filter 2 and includes a nozzle, is disposed above the evaporation filter 2. Details of the filter-specific water supply unit 21 will be described later. The evaporation filter 2 has water absorbency, and water supplied from the filter-specific water supply unit 21 permeates the entire surface of the evaporation filter 2, thereby promoting the evaporation of water. The supply air flow passage 4 from the evaporation filter 2 to the supply air outlet port 43 extends upward from the evaporation filter 2.

The supply air flowing out from the supply air passage 31 of the sensible heat exchanger 3 passes through the evaporation filter 2 and is blown out into the conditioned space from the supply air outlet port 43. The supply air flowing out from the outlet of the supply air passage 31 is initially cooled by the exhaust air via the sensible heat exchanger 3 and is then secondarily cooled by the evaporation filter 2, thereby undergoing two-stage cooling. Accordingly, compared to a direct evaporative cooling system that uses only the evaporation filter 2, the temperature of the supply air is further reduced.

The residual water from the sensible heat exchanger 3 and the residual water from the evaporation filter 2 are received by the drain pan 6, which is located below the sensible heat exchanger 3 and the evaporation filter 2. This residual water is collected by being stored in the water storage space of the drain pan 6. The water collected in the drain pan 6 is supplied to the evaporation filter 2 and the sensible heat exchanger 3 via a supply water passage 7.

As shown in FIG. 1, the supply water passage 7 is provided with an inline filter 75, a flow rate sensor 77, and a first pump 76. By driving the first pump 76, the water stored in the drain pan 6 is supplied by the first pump 76 to both the filter-specific water supply unit 21, which is arranged above the evaporation filter 2, and the heat-exchange water supply unit 33, which is arranged above the sensible heat exchanger 3. The water dripped from the nozzle of the filter-specific water supply unit 21 is supplied to the evaporation filter 2, and the water dripped from the nozzle of the heat-exchange water supply unit 33 is supplied to the exhaust air passage 32 of the sensible heat exchanger 3. In this manner, the supply water passage 7, the heat-exchange water supply unit 33, the filter-specific water supply unit 21, and the drain pan 6 together form a circulating water passage that circulates water between the evaporation filter 2 and the sensible heat exchanger 3, which constitute the cooling unit 20, and the drain pan 6. Accordingly, the first pump 76 functions as a circulation pump for circulating water through the circulating water passage.

The supply water passage 7 is in communication with a bottom hole 611 formed in the bottom surface 61 of the drain pan 6. The supply water passage 7 includes a first water supply passage 71, which extends upward from below along the first side wall 111 of the housing 10, a second water supply passage 72 connected to the heat-exchange water supply unit 33, a connection water supply passage 73 that links the first water supply passage 71 and the second water supply passage 72, and a water supply unit connection passage 74 that links the heat-exchange water supply unit 33 and the filter-specific water supply unit 21. The heat-exchange water supply unit 33, the filter-specific water supply unit 21, the water supply unit connection passage 74, and the second water supply passage 72 are fixed to the door 12. Each of the first water supply passage 71, the second water supply passage 72, and the water supply unit connection passage 74 includes a pipe made of, for example, resin or metal.

The supply water passage 7 includes a branching section 78 that branches into a drainage passage 781. The drainage passage 781 extends from the branching section 78 at its base end, with the drainage port 1122 provided at its distal end, which is exposed outside the housing 10. A drainage valve 782, which includes an opening and closing mechanism that will be described later, is arranged in the drainage passage 781. As for the drainage port 1122, which is located at the distal end of the drainage passage 781, the drainage valve 782 remains fully closed during normal use, such as when the air conditioning device 1 is in operation. During maintenance or other servicing of the air conditioning device 1, opening the drainage valve 782 allows the water stored in the drain pan 6 to be discharged outside the air conditioning device 1 through the drainage port 1122.

The supply water passage 7 and the water supply tank 8 are in communication with each other via a replenishment passage 9. A second pump 91 is arranged in the replenishment passage 9. The second pump 91 functions as a pump configured to convey water from the water supply tank 8 to the supply water passage 7. One end of the replenishment passage 9 is connected to the lower portion of the water supply tank 8, while the other end is connected to a connection, located between the flow rate sensor 77 and the first pump 76, in the supply water passage 7. The flow rate sensor 77 is arranged upstream of the connection point in the supply water passage 7. A water level sensor 63 is arranged above the bottom surface 61 of the drain pan 6.

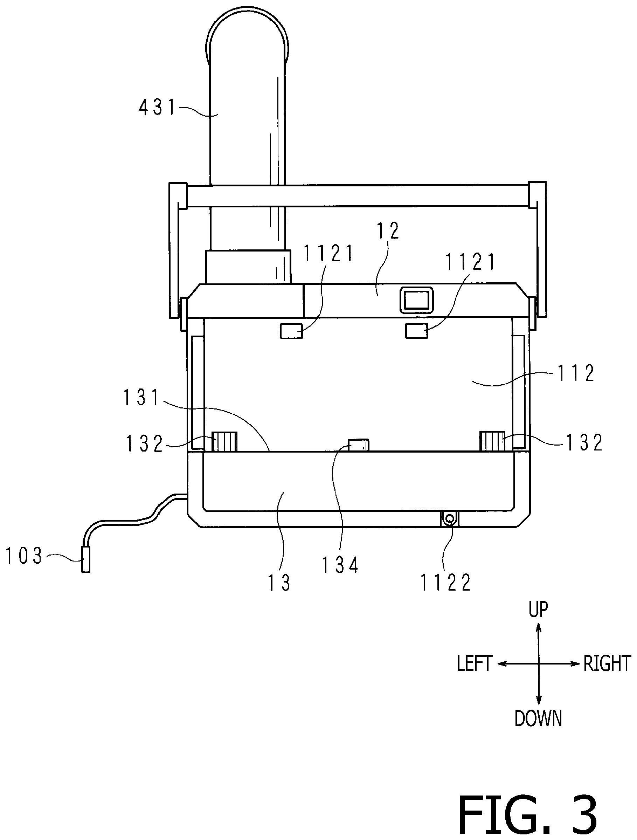

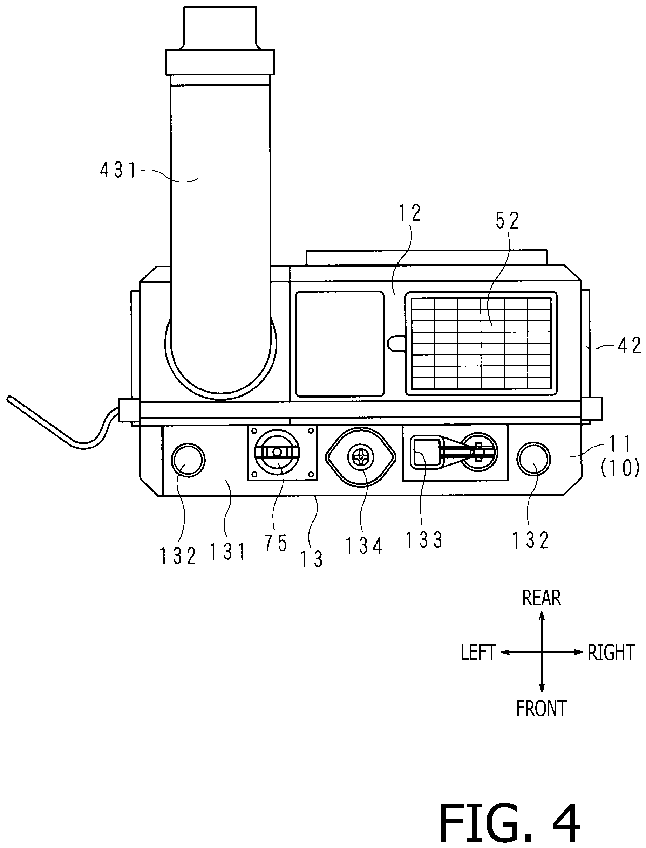

FIG. 3 is a front view showing the front appearance of the air conditioning device 1 with the water supply tank 8 removed. FIG. 4 is a plan view showing a top appearance of the air conditioning device 1 with the water supply tank 8 removed. On an exterior side of the second side wall 112 of the housing 10, the tank base section 13 is formed, on which the water supply tank 8 is to be mounted. The tank base section 13 is located to protrude forward from the second side wall 112, forming a step between the tank base section 13 and the second side wall 112. The upper surface of the tank base section 13 functions as the mounting surface 131 on which the water supply tank 8 is placed. Cylindrical boss sections 132 are formed on the mounting surface 131 of the tank base section 13. In the present embodiment, two boss sections 132 are arranged on the upper surface of the tank base section 13. Between these two boss sections 132, an inlet tube section 134 is arranged, which forms a communication hole that is in communication with the replenishment passage 9. A tank filter 90 may be arranged inside the inlet tube section 134. As described above, when placing the water supply tank 8 on the mounting surface 131 of the tank base section 13, the boss sections 132 engage with recessed boss receiving sections 81 formed on the lower surface of the water supply tank 8. This allows for efficient positioning when attaching the water supply tank 8 to the housing 10.

The mounting surface 131 of the tank base section 13 is further provided with an inline filter 75 and a drainage lever 133. The structure and arrangement of the inline filter 75 and the drainage lever 133 will be described later.

The second side wall 112 of the housing 10 is provided with a lock mechanism 14 for keeping the door 12 in a closed state. The outer surface of the lock mechanism 14 is configured to be flush with the second side wall 112, meaning that the outer surface of the lock mechanism 14 forms part of the second side wall 112. The operation section of the lock mechanism 14 is located inside a recessed portion formed on the outer surface of the lock mechanism 14 and is provided with a lever and other components used to open and close the door 12.

In attaching the water supply tank 8 to the housing 10, the water supply tank 8 is placed on the mounting surface 131, which is the upper surface of the tank base section 13. In this state, the rear surface of the water supply tank 8 faces the second side wall 112 of the housing 10. As a result, the lock mechanism 14, which is located on the second side wall 112, becomes covered by the rear surface of the water supply tank 8. Accordingly, in the state where the water supply tank 8 is attached to the housing 10, the operator of the air conditioning device 1 is prevented from opening the door 12 by operating the operation section of the lock mechanism 14.

Furthermore, the drainage lever 133 and the inline filter 75, which are arranged on the mounting surface 131 of the tank base section 13, are also covered by the bottom surface of the water supply tank 8. Accordingly, in the state where the water supply tank 8 is attached to the housing 10, the operator of the air conditioning device 1 is prevented from performing operations such as operating the drainage lever 133 or removing the inline filter 75 while the air conditioning device 1 is in operation. Additionally, when the drainage lever 133 is operated into an open state for the purpose of draining water, the drainage lever 133 protrudes from the mounting surface 131. In this state, attaching the water supply tank 8 becomes impossible. Therefore, when the water supply tank 8 is to be attached to the mounting surface 131, the drainage lever 133 must inevitably be returned to its original position inside the mounting surface 131 and set to the closed state, thereby reliably preventing any failure to close the drainage lever 133.

Claw engagement sections 1121 are formed on the second side wall 112, which becomes exposed when the water supply tank 8 is removed from the housing 10. Each claw engagement section 1121 includes a rectangular hole or a rectangular recessed portion formed in the second side wall 112, and in the present embodiment, two such sections are provided on the left and right sides, respectively. Claw portions, which form the tips of the lock sections 802 that are part of the restriction structure 80 of the water supply tank 8, engage respectively with **the** claw engagement sections 1121. This engagement restricts the movement of the water supply tank 8 in the vertical direction, preventing the water supply tank 8 from detaching from the housing 10 even when a load is applied in the vertical direction.

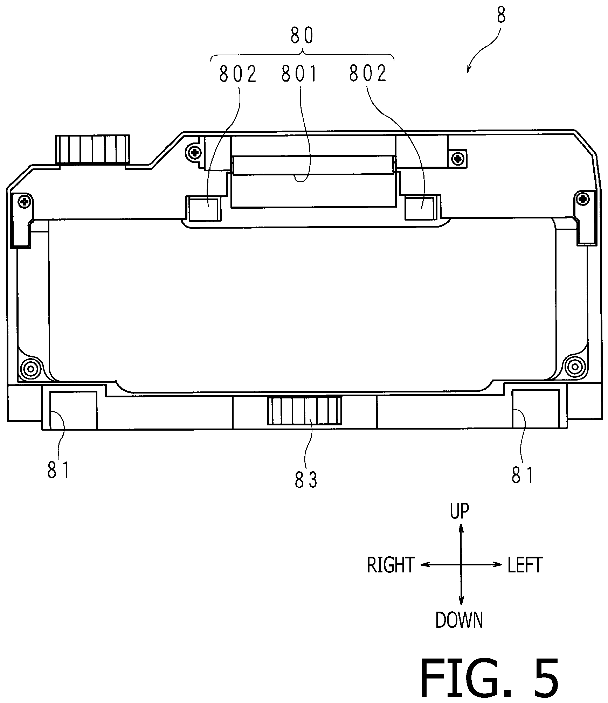

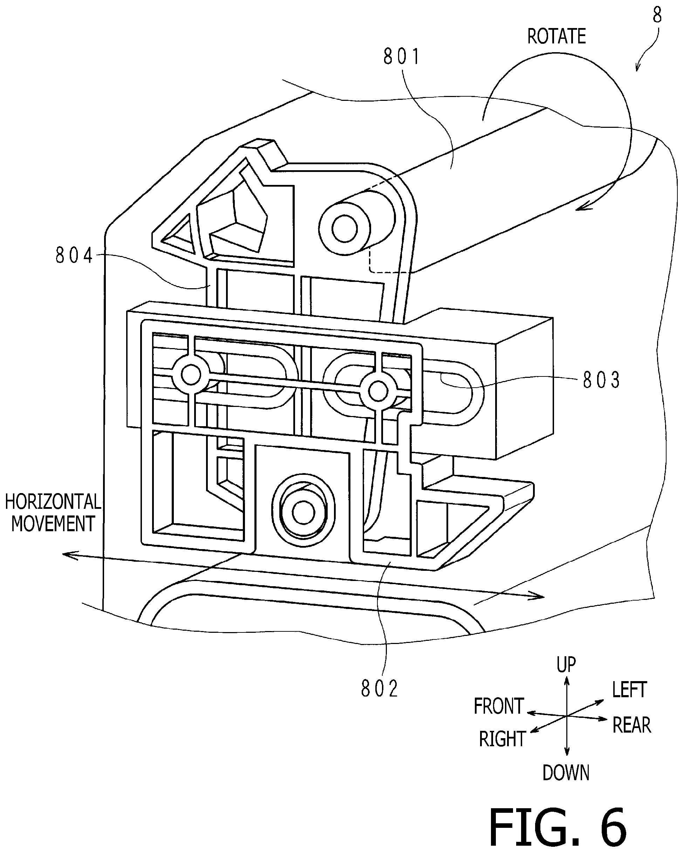

FIG. 5 is a perspective view showing an external appearance of the water supply tank 8. FIG. 6 is an explanatory diagram showing a restriction structure 80 that regulates the attachment and detachment of the water supply tank 8 to and from the housing 10. The water supply tank 8 is formed into a rectangular box shape and is made of, for example, resin or metal. On the lower surface of the water supply tank 8, boss receiving sections 81 are formed to correspond to the boss sections 132 of the tank base section 13. In the present embodiment, where the boss sections 132 are formed as protrusions, the boss receiving sections 81 are formed as recesses so that the boss sections 132 and the boss receiving sections 81 engage with each other.

On the lower surface of the water supply tank 8, a discharge tube section 83, which protrudes in a tubular shape, is formed between the two boss receiving sections 81. The internal space of the discharge tube section 83 functions as a discharge hole through which water inside the water supply tank 8 flows out. The water inside the water supply tank 8 flows from the discharge tube section 83 into the replenishment passage 9. A tank filter 90 may be arranged inside the discharge tube section 83. Even when dust is contained in the water from the water supply tank 8, the tank filter 90 collects the dust, thereby preventing the dust from entering the supply water passage 7. The discharge tube section 83 may also be provided with a valve body configured to stop the outflow of water from the water supply tank 8 in a state where the water supply tank 8 is removed.

A decorative plate is mounted on the lower portion of the water supply tank 8, covering the boss receiving sections 81 and the discharge tube section 83 from the side. Alternatively, the boss receiving sections 81 may be formed within recessed portions on the lower surface of the water supply tank 8, and the discharge tube section 83 may be located inside a hole formed in the lower surface of the water supply tank 8, thereby being arranged inward relative to the lower surface of the water supply tank 8. With such configurations, the boss receiving sections 81 and the discharge tube section 83 are prevented from protruding from the lower surface of the water supply tank 8, allowing the lower surface of the water supply tank 8 to be placed on a horizontal surface such as the ground, thereby enabling the tank to stand independently.

The water supply tank 8 includes the handle section 801, which is to be gripped by the operator when removing the water supply tank 8, and is provided with the restriction structure 80 including the handle section 801, the lock sections 802, slide guide sections 803, and a connecting member 804. The handle section 801 is provided at an upper part of the water supply tank 8 and includes a round bar-shaped grip portion. The handle section 801 is configured to be rotatable, and rotates when the grip portion is grasped by the operator. The lock sections 802 have the claw portions at their tips and move horizontally in response to the rotation of the handle section 801. The slide guide sections 803 are formed with elongated holes each extending in the horizontal direction, within which cylindrical protrusions of the lock sections 802 slide, thereby guiding the horizontal movement of the lock sections 802. The connecting member 804 connects the handle section 801 and the lock sections 802, transmitting the stress generated by the rotation of the handle section 801 to the lock sections 802. Through this connecting member 804, the operation of the handle section 801 and the lock sections 802 is interlocked.

The horizontal direction in which the lock sections 802 move corresponds to the front-rear direction of the air conditioning device 1 in the present embodiment. When the handle section 801 is not being rotated, that is, when the handle section 801 is not being gripped by the operator and the water supply tank 8 is attached to the housing 10, the lock sections 802 are located at the rear side, so that the claw portions at the tip of the lock sections 802 engage with the respective claw engagement sections 1121 formed in the second side wall 112 of the housing 10. As a result, the claw portions at the tips of the lock sections 802 engage with the claw engagement sections 1121 formed in the second side wall 112 of the housing 10. This engagement restricts the movement of the water supply tank 8 in the vertical direction. When the handle section 801 is gripped by the operator and rotated, the lock sections 802 move to the front side, causing the claw portions at the tips of the lock sections 802 to disengage from the claw engagement sections 1121 formed in the second side wall 112 of the housing 10, thereby releasing the engaged state. Consequently, the vertical restriction of the water supply tank 8 is released, allowing the water supply tank 8 to be lifted upward and removed from the housing 10.

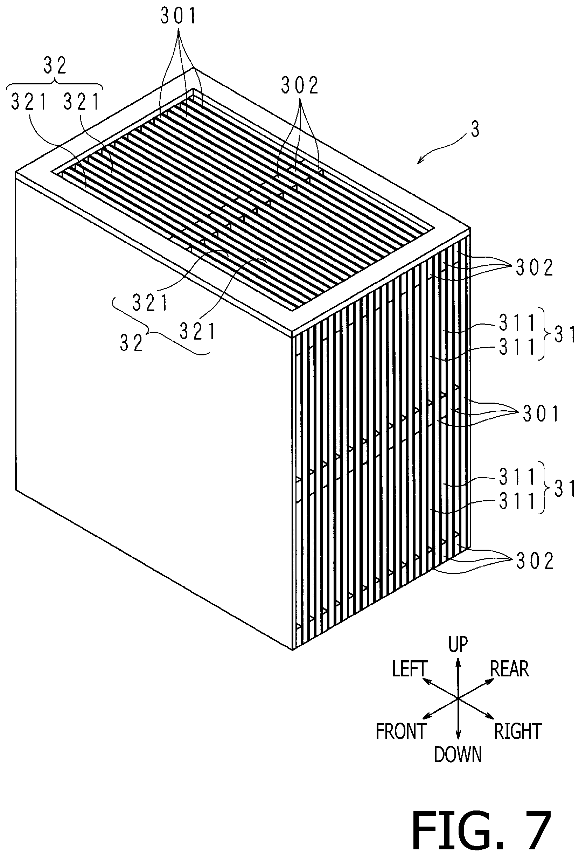

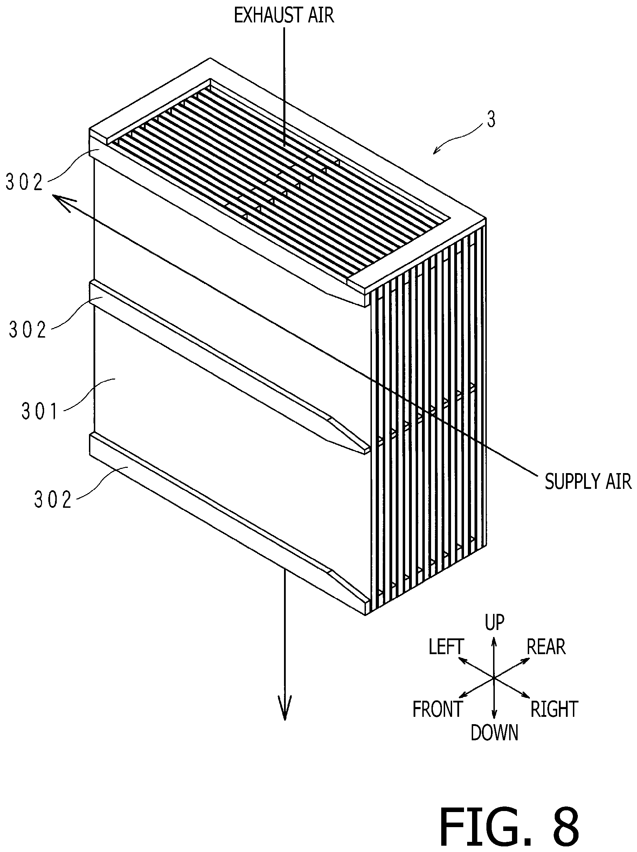

FIG. 7 is a schematic perspective view showing an example configuration of the sensible heat exchanger 3. FIG. 8 is an explanatory diagram showing the state in which spacers 302 of the sensible heat exchanger 3 are exposed. The sensible heat exchanger 3 includes multiple supply air passages 31 and multiple exhaust air passages 32 and has a stacked structure in which the supply air passages 31 and exhaust air passages 32 are alternately layered. The sensible heat exchanger 3 is formed by stacking multiple membrane members 301, with two or more spacers 302 interposed between each pair of membrane members that are adjacent in the stacking direction. That is, two or more spacers 302 are arranged sandwiched between two adjacent membrane members 301. In the present embodiment, three spacers 302 are arranged-one at each end of the membrane member 301 and one at the center.

The spacer 302 is formed, for example, as an elongated rectangular bar and is arranged such that its longitudinal direction is parallel to the direction of airflow. In this configuration, adjacent groups of spacers 302 in the stacking direction-that is, groups of spacers 302 located with a membrane member 301 interposed therebetween-are configured such that one group of spacers 302 forms supply air paths 311, while the other group forms exhaust air paths 321. Since the groups of spacers 302 adjacent in the stacking direction are arranged with their longitudinal directions rotated 90 degrees relative to each other, a crossflow between the supply air paths 311 and the exhaust air paths 321 can be formed with a relatively simple structure.

Each membrane member 301 is formed as a thin wall formed in a rectangular or square shape and having high thermal conductivity and shielding properties. The membrane member 301 is formed of a thin wall that has high thermal conductivity and shielding properties. The membrane member 301 blocks the flow of air and moisture between the supply air passage 31 and the exhaust air passage 32 while allowing heat exchange between the supply air and the exhaust air.

The supply air passage 31 is constituted by multiple supply air paths 311. Each supply air path 311 is defined by two membrane members 301 that are adjacent to each other in the stacking direction, and by two or more spacers 302 arranged between the two membrane members 301. In the illustrated embodiment, when three spacers 302 are arranged between two adjacent membrane members 301, two supply air paths 311 are formed between the two membrane members 301. The exhaust air passage 32 is formed by multiple exhaust air paths 321. Each exhaust air path 321 is defined by two membrane members 301 that are adjacent in the stacking direction, and by three spacers 302 arranged between the two membrane members 301, in the same manner as the supply air path 311.

An end portion of each of the spacers 302 forming the supply air path 311, specifically the end portion on the side where air, that is, the supply air, flows in, is formed in a tapered shape. Each of the two spacers 302 located at the ends of the membrane member 301 is tapered only on the inward-facing end portion. The spacer 302 located at the center of the membrane member 301 is tapered on both end portions. By forming the upstream end portions of the spacers 302 in the direction of supply airflow into a tapered shape with a width that increases toward the airflow direction, the supply air paths 311 formed between the tapered end portions of two adjacent spacers 302 are configured such that the passage width becomes narrower in the direction of supply airflow. In other words, the inlet width of each supply air path 311 is widened, and the cross-sectional area of the passage gradually or stepwise decreases along the airflow direction. As a result, the pressure loss when the supply air flows into the supply air paths 311 is reduced. Similarly, the end portions of the spacers 302 forming the exhaust air paths 321 may also be tapered on the side where air, in this case exhaust air, flows in.

A nonwoven fabric may be attached to the surface of the membrane member 301 that forms the exhaust air path 321. By attaching the nonwoven fabric to the surface of the membrane member 301 that forms the exhaust air path 321, the water supplied to the exhaust air path 321 can be retained. In this way, the nonwoven fabric functions as a wet section that retains water. Since the inner surface of the exhaust air path 321 is formed by the nonwoven fabric attached to one surface of the membrane member 301, the water supplied from the heat-exchange water supply unit 33 is retained by the membrane member 301. As a result, the distribution density of water in contact with the exhaust air is increased, thereby enhancing the evaporation efficiency between the exhaust air passing through the exhaust air path 321 and the water, promoting evaporation of the water by the exhaust air, or achieving both effects. Consequently, the cooling effect of the exhaust air by the water is increased. It should be noted that the water retained in the membrane member 301 also participates in sensible heat exchange between the exhaust air flowing through the exhaust air passage 32 in the sensible heat exchanger 3 and the supply air flowing through the supply air passage 31 that is in crossflow with the exhaust air.

In the exhaust air paths 321, since nonwoven fabric is attached to both opposing surfaces of adjacent membrane members 301, the spacers 302 are thereby arranged between the nonwoven fabrics attached to the respective opposing surfaces. The nonwoven fabric may also be formed with cutouts corresponding to the positions where the spacers 302 are arranged.

Since the rigidity of the spacer 302 is higher than that of the membrane member 301, the spacers 302 function as reinforcing members in the state where the sensible heat exchanger 3 is installed in the housing 10, thereby suppressing deformation of the sensible heat exchanger 3. The thickness of the spacer 302, that is, the width of the spacer 302 in the stacking direction, may be greater than the thickness of the membrane member 301. The spacer 302 may be formed as a solid body without a hollow structure. Alternatively, the resin or other material used for the spacer 302 may have higher rigidity than the resin or other material used for the membrane member 301. As a result, the rigidity of the spacer 302 may be higher than that of the membrane member 301. While the spacer 302 is described as a solid body, it is not limited to this configuration and may have a hollow structure, provided that the required design rigidity is ensured. The rigidity of the spacer 302 and the membrane member 301 may be indicated by Young's modulus or other mechanical properties. Since the rigidity of the spacer 302 is higher than that of the membrane member 301, when the same stress is applied in the same direction to both the spacer 302 and the membrane member 301, the amount of deflection of the spacer 302 is less than that of the membrane member 301.

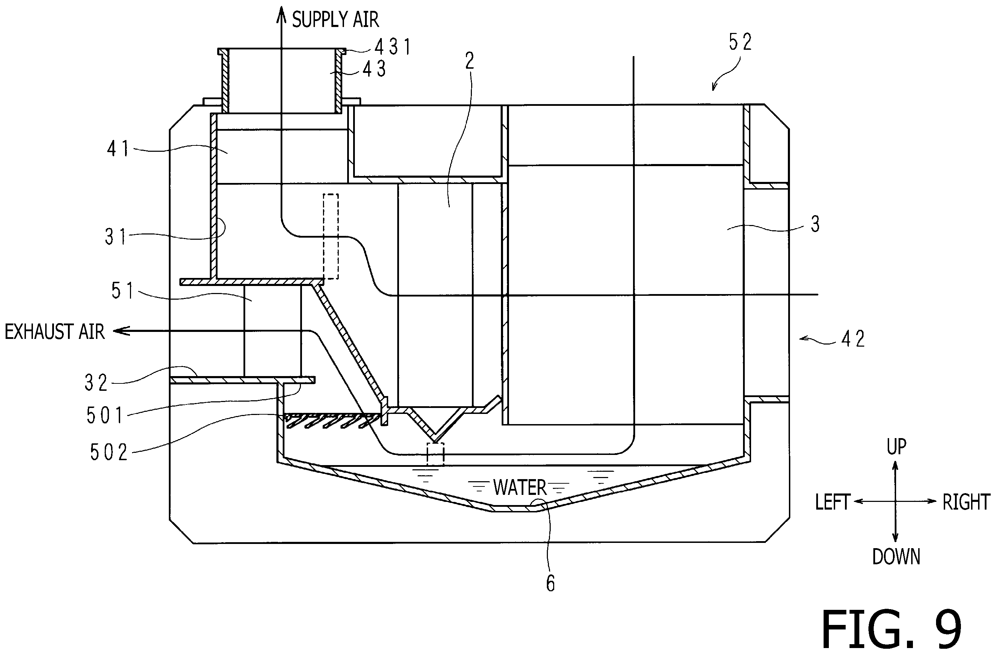

FIG. 9 is an explanatory diagram showing the flow of supply air and exhaust air inside the air conditioning device 1. In the supply air flow passage 4 and the exhaust air flow passage 5, which are configured inside the housing 10 of the air conditioning device 1, the minimum flow path cross-sectional area of the exhaust air flow passage 5 is smaller than that of the supply air flow passage 4. As illustrated in the present embodiment, the minimum flow path cross-sectional area of the supply air flow passage 4 is located at a corner portion that connects to the section where the supply air fan 41 is arranged, after the supply air has passed through the evaporation filter 2, throughout the supply air flow passage 4.

Throughout the exhaust air flow passage 5, after passing through the sensible heat exchanger 3, the flow path cross-sectional area directly below the evaporation filter 2 within the internal space of the drain pan 6 becomes the minimum flow path cross-sectional area. The flow path cross-sectional area directly below the evaporation filter 2 within the internal space of the drain pan 6 varies depending on the water level of the water stored in the drain pan 6. However, even when the water level is at its minimum, the depth of the drain pan 6 is set so that the minimum flow path cross-sectional area of the exhaust air flow passage 5 remains smaller than the flow path cross-sectional area of the supply air flow passage 4.

The exhaust air flow passage 5 and the supply air flow passage 4 may be configured such that the minimum flow path cross-sectional area of the exhaust air flow passage 5 is set to be one-half or less of the minimum flow path cross-sectional area of the supply air flow passage 4. By making the minimum flow path cross-sectional area of the exhaust air flow passage 5 smaller than that of the supply air flow passage 4, the airflow resistance in the exhaust air flow passage 5 can be made greater than that in the supply air flow passage 4. That is, if the volumetric flow rate of the exhaust air flowing through the exhaust air flow passage 5 is set equal to the volumetric flow rate of the supply air flowing through the supply air flow passage 4, the pressure loss in the exhaust air flow passage 5 will be greater than the pressure loss in the supply air flow passage 4.

Even when the size relationship between the minimum flow path cross-sectional areas of the exhaust air flow passage 5 and the supply air flow passage 4 is set as described above, the exhaust airflow volume, or volumetric flow rate, generated by the exhaust air fan 51 in the exhaust air flow passage 5 remains smaller than the supply airflow volume, or volumetric flow rate, generated by the supply air fan 41 in the supply air flow passage 4. As a result, the pressure loss in the exhaust air flow passage 5 can be relatively suppressed. Accordingly, while maintaining the cooling performance of the air conditioning device 1, the power consumption of the exhaust air fan 51 can be reduced compared to the power consumption of the supply air fan 41, thereby suppressing or reducing the overall power consumption during operation of the air conditioning device 1.

Under the condition in which the size relationship between the minimum flow path cross-sectional areas of the exhaust air flow passage 5 and the supply air flow passage 4, and the size relationship between the volumetric flow rates of the exhaust air fan 51 and the supply air fan 41 are set as described above, the respective operating points of the exhaust air fan 51 and the supply air fan 41 in rated operation based on product specifications of the air conditioning device 1 are specified in a first airflow-static pressure characteristic and a second airflow-static pressure characteristic, respectively. At each of the operating points of the exhaust air fan 51 and the supply air fan 41, their respective volumetric flow rates are defined, and the pressure loss values in the exhaust air flow passage 5 and the supply air flow passage 4 corresponding to each of those volumetric flow rates are determined. These airflow-static pressure characteristics and operating points are represented, for example, in a QP characteristic diagram showing airflow and pressure loss values. At each of the operating points of the exhaust air fan 51 and the supply air fan 41, the exhaust airflow of the exhaust air fan 51, determined by the ventilation resistance of the exhaust air flow passage 5, is smaller than the supply airflow of the supply air fan 41, determined by the ventilation resistance of the supply air flow passage 4.

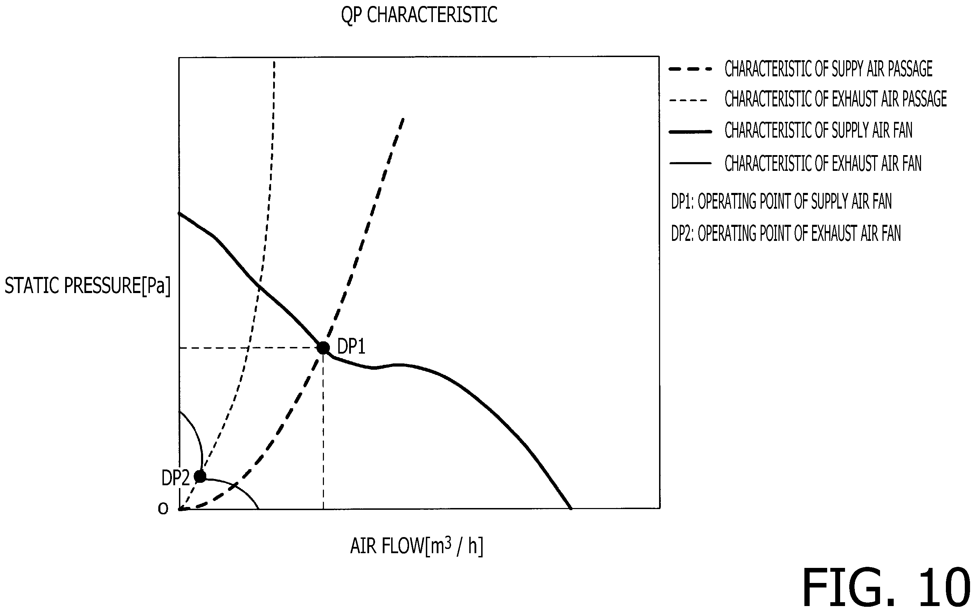

FIG. 10 is an explanatory diagram showing an example of the QP characteristic diagram that represents airflow volume and pressure loss. In this diagram, the horizontal axis indicates airflow volume (Q [m³/h]) and the vertical axis indicates static pressure (P [Pa]). The QP characteristic diagram shows the operating points DP1 and DP2 of the supply air fan 41 and the exhaust air fan 51, respectively. The airflow volume at DP1 (supply airflow) is greater than that at DP2 (exhaust airflow). DP1 is defined as the intersection of the characteristic curves of the supply air fan 41 and the supply air flow passage 4, thereby indicating the airflow-static pressure characteristics (second airflow-static pressure characteristics) of the supply air fan 41. Similarly, DP2 is defined as the intersection of the characteristic curves of the exhaust air fan 51 and the exhaust air flow passage 5, indicating the first airflow-static pressure characteristics. As shown in the QP characteristic diagram, the characteristic curve of the supply air flow passage 4 has a steeper slope than that of the exhaust air flow passage 5, meaning that the pressure loss increases more rapidly in the exhaust air flow passage 5 as airflow increases.

When the supply air fan 41 is configured to be driven to generate multiple different supply airflow volumes in accordance with control signals from the controller 101 or the applied voltage level, it has multiple operating points corresponding to the respective airflow volumes. Even in this case, the rotational speed of the exhaust air fan 51 is controlled such that the exhaust airflow volume remains smaller than any of the different supply airflow volumes of the supply air fan 41. That is, the exhaust airflow volume of the exhaust air fan 51 is smaller than any of the different supply airflow volumes of the supply air fan 41, including the smallest supply airflow volume.

Based on the operating points of the exhaust air fan 51 and the supply air fan 41, the rate of increase in pressure loss when increasing the rotational speed of the exhaust air fan 51 is greater than the rate of increase in pressure loss when increasing the rotational speed of the supply air fan 41. That is, the rate of increase in airflow resistance (first airflow resistance) in the exhaust air flow passage 5 is greater than the rate of increase in airflow resistance (second airflow resistance) in the supply air flow passage 4. By allowing the airflow resistance in the exhaust air flow passage 5 to be greater than that in the supply air flow passage 4, the degree of design flexibility for the exhaust air flow passage 5 within the housing 10 of the air conditioning device 1 can be improved.

In the present embodiment, the airflow resistance of the exhaust air flow passage 5 is set to be greater than that of the supply air flow passage 4 by making the minimum flow path cross-sectional area of the exhaust air flow passage 5 smaller than that of the supply air flow passage 4. However, the configuration is not intended to be limiting. For example, the airflow resistance of the exhaust air flow passage 5 may also be made greater than that of the supply air flow passage 4 by setting the overall average flow path cross-sectional area of the exhaust air flow passage 5 to be smaller than the overall average flow path cross-sectional area of the supply air flow passage 4.

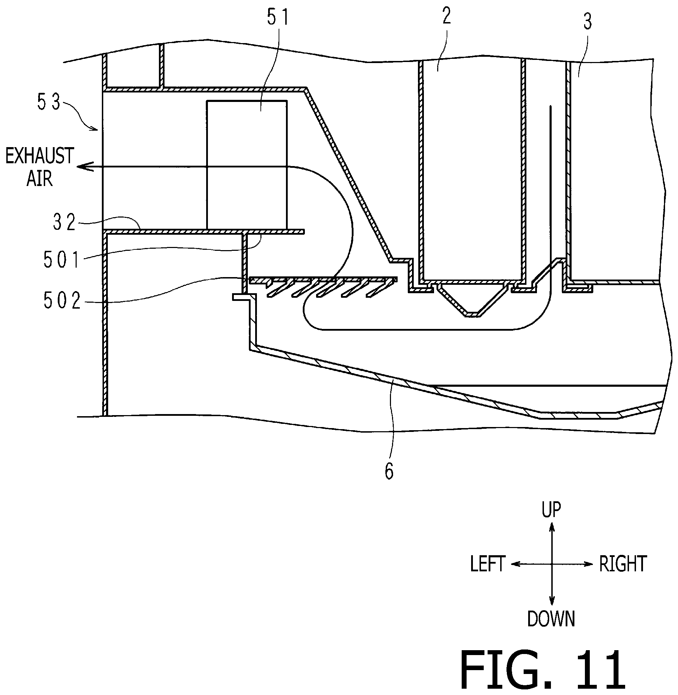

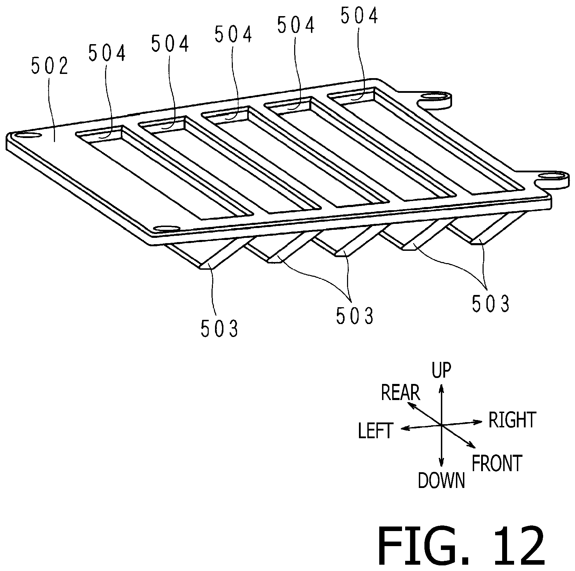

FIG. 11 is an explanatory diagram showing an enlarged view of a part of the exhaust air flow passage 5 located downstream of the drain pan 6. FIG. 12 is a perspective view showing the external appearance of the suppression plate 502. In the exhaust air flow passage 5 which is located downstream of the drain pan 6 in the direction of exhaust airflow, a suppression plate 502 and a return section 501 are arranged between the drain pan 6 and the exhaust air fan 51. These suppression plate 502 and return section 501 are arranged in series in the exhaust airflow direction, with the suppression plate 502 located upstream of the return section 501. That is, the exhaust air passing through the drain pan 6 first passes through a gap section 504 formed in the suppression plate 502, then reaches the return section 501, flows around the return section 501, and is subsequently drawn into the exhaust air fan 51.

The return section 501 is located near the upper end of the drain pan 6 and is configured to extend horizontally or in the left-right direction from above the drain pan 6 toward its central portion. The return section 501 has a flat plate shape and is arranged to partially cover the opening of the drain pan 6 from above. The flat plate-shaped return section 501 may also be formed by extending the lower surface of the linear exhaust air flow passage 5, where the exhaust air fan 51 is mounted, in the upstream direction of the exhaust airflow. Since the return section 501 is arranged to cover, from above, the downstream portion of the opening of the drain pan 6 in the direction of the exhaust airflow, it functions to shield water that splashes out from the opening of the drain pan 6, thereby preventing the water from being drawn into the supply air fan 41.

The suppression plate 502 is configured as a louver provided with multiple blade plates 503, which are elongated plate members arranged in parallel to form a structured component. In the suppression plate 502, which is configured as a louver, a gap section 504 is formed between each pair of adjacent blade plates 503, through which exhaust air flows. That is, the gap sections 504 constitute a part of the exhaust air flow passage 5 and, for example, form rectangular openings. The blade plates 503 are arranged to protrude downward from a lower surface of the suppression plate 502, extending toward the upstream side in the direction of the exhaust airflow. A base end portion of each blade plate 503, which protrudes from the lower surface of the suppression plate 502, is located closer to the central portion of the drain pan 6 than a tip end portion of the blade plate 503. In other words, each blade plate 503 extends obliquely downward from the base end portion on the lower surface of the suppression plate 502 in the opposite direction from the central portion of the drain pan 6. Consequently, the exhaust air flowing out of the drain pan 6 bypasses the individual blade plates 503 before passing through the gap sections 504. This effectively shields water that might otherwise splash out of the drain pan 6, allowing the blade plates 503 to efficiently prevent such water from escaping.

The internal space of the drain pan 6 forms part of the exhaust air flow passage 5, and the inner wall surface of the drain pan 6 constitutes part of the inner surface of the exhaust air flow passage 5. The suppression plate 502 is disposed in the exhaust air flow passage 5 between the drain pan 6 and the exhaust air fan 51, at a location where the exhaust air flows after passing through the internal space of the drain pan 6. That is, the suppression plate 502 is located to cover from above a part of the downstream opening in the exhaust airflow direction within the drain pan 6. Since the suppression plate 502 is arranged to cover the flow path cross-section of the exhaust air flow passage 5 at the downstream opening of the drain pan 6, the suppression plate 502 efficiently prevents water from splashing out of the drain pan 6.

In a configuration in which the suppression plate 502 covers the flow path cross-section at the point where the exhaust air, after passing through the internal space of the drain pan 6, flows, each of the four corners of the rectangular suppression plate 502 may be fastened and fixed. In this case, two corner portions at one end of the suppression plate 502 may be fastened to the upper end portion of the drain pan 6, and the other two corner portions at the opposite end may be fastened to a structural member located above the drain pan 6.

By providing the return section 501 and the suppression plate 502, it is possible to suppress water from splashing out of the drain pan 6. However, the provision of these components results in an increase in airflow resistance. In this respect, since the return section 501 and the suppression plate 502 are provided in the exhaust air flow passage 5, and the exhaust air flow passage 5 is permitted to have greater airflow resistance than the supply air flow passage 4, such an increase in airflow resistance is acceptable. Accordingly, by providing the return section 501 and the suppression plate 502 in the exhaust air flow passage 5, where higher airflow resistance is acceptable compared to the supply air flow passage 4, it is possible to suppress splashing of water from the drain pan 6 without affecting the cooling performance of the air conditioning device.

In the present embodiment, the return section 501 and the suppression plate 502 are arranged in the exhaust air flow passage 5 as structural components to prevent water from splashing out of the drain pan 6. However, this configuration is not limited to both components being present; either the return section 501 or the suppression plate 502 alone may be provided. For example, when only the return section 501 is arranged, the return section 501 may be located to cover the flow path cross-section similarly to the suppression plate 502 and may also be formed in a louver shape.

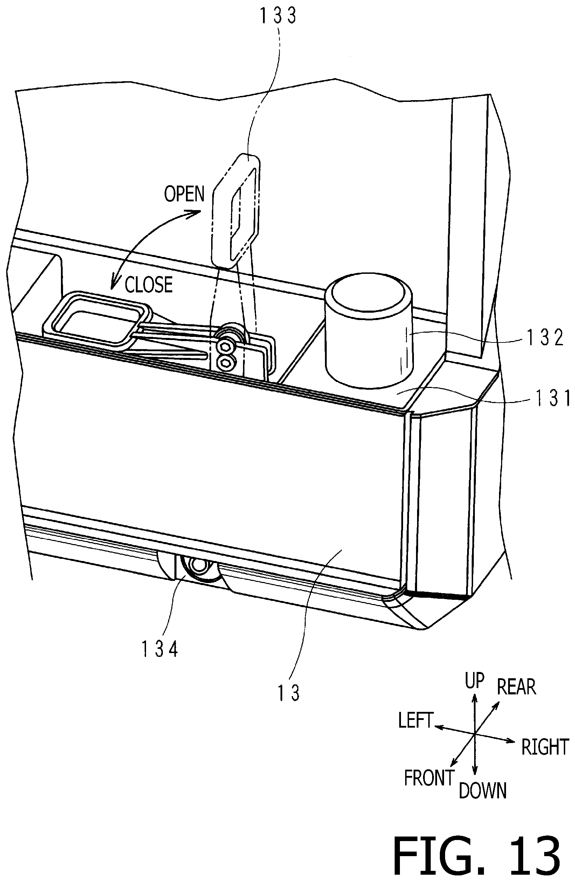

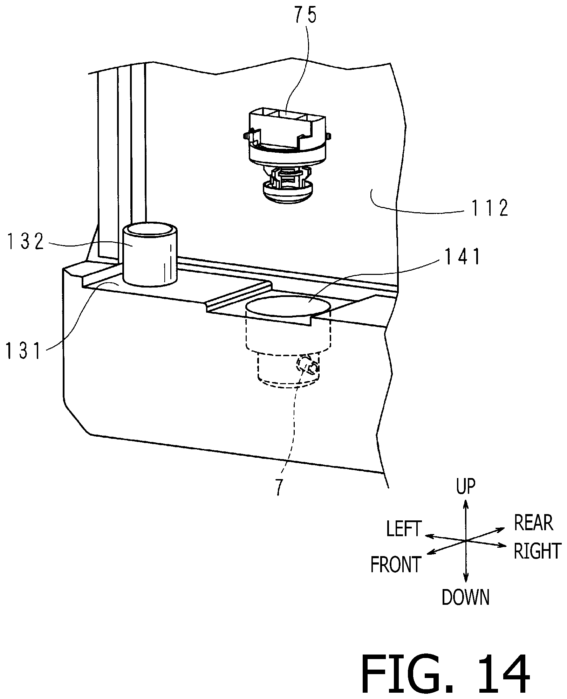

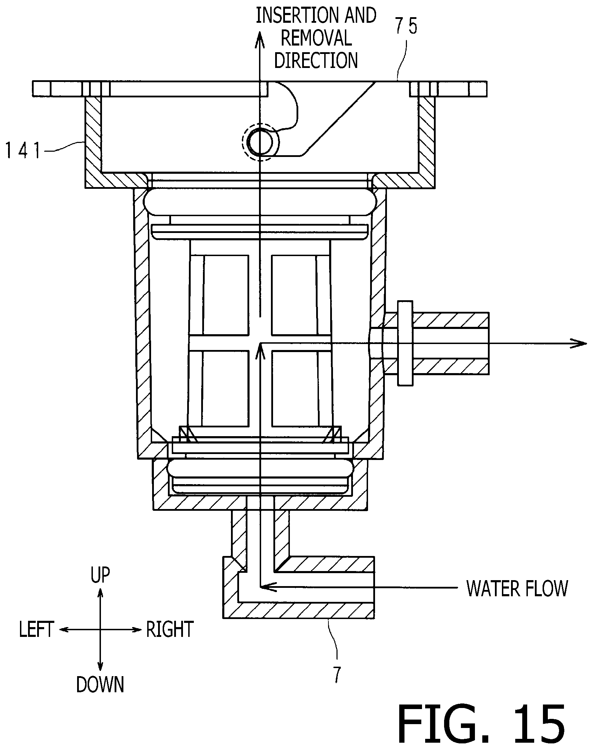

FIG. 13 is an explanatory diagram showing the rotation of the drainage lever 133. FIG. 14 is an explanatory diagram showing the attachment and detachment of the inline filter 75. FIG. 15 is a schematic side sectional view showing a fitted state of the inline filter 75 and a filter case 141. As described above, the drainage lever 133 and the inline filter 75 are installed on the mounting surface 131 of the tank base section 13. The drainage lever 133 and inline filter 75 are configured to be operable only when the tank is removed from the main body 11 of the air conditioning device 1.

The drainage lever 133 is formed in a rod shape, with a ring-shaped gripping section at its tip for the operator to hold. The drainage lever 133 is configured to be movable relative to the mounting surface 131 of the tank base section 13. The movable angle of the drainage lever 133 is, for example, 90 degrees, allowing it to rotate between a horizontal state, where it is parallel to the mounting surface 131, and a vertical state, where it is perpendicular to the mounting surface 131.

The drainage valve 782 is opened and closed in response to the operation of the drainage lever 133. When closing the drainage valve 782, the drainage lever 133 moves into the horizontal state, where it is parallel to the mounting surface 131 and located inside the mounting surface 131. When opening the drainage valve 782, the drainage lever 133 moves into the vertical state, where it is perpendicular to the mounting surface 131 and protrudes from the mounting surface 131. By configuring the drainage lever 133 in this manner, it is possible to prevent the drainage valve 782 from being opened and the water stored in the drain pan 6 from being discharged, while the water supply tank 8 is attached to the housing 10.

The inline filter 75, which is located in the supply water passage 7 between the first pump 76 and the drain pan 6, is mounted so that the inline filter 75 can be attached to and detached from the mounting surface 131 of the tank base section 13. The inline filter 75 is installed in a cylindrical filter case 141, which is arranged inside the tank base section 13. The cylindrical filter case 141 has an opening and is arranged such that the opening is exposed from above the mounting surface 131. When the inline filter 75 is installed in the filter case 141, it is inserted into the interior of the filter case 141 through the opening, positioning it inside the mounting surface 131.

The inline filter 75 includes a cylindrical filter section. As water flowing into the inline filter 75 passes through the filter section, dust and debris carried by the water are captured by the filter section. In the direction of water flow, water discharged from the drain pan 6 first flows into the interior of the cylindrical filter section and then exits through a side surface of the filter section to the exterior of the inline filter 75. By configuring the filter section in a cylindrical shape, its surface area can be increased. Consequently, the dust and debris captured by the filter section of the inline filter 75 remain inside the inline filter 75.

The water passing through the inline filter 75 flows from the lower side to the upper side, and when attaching the inline filter 75 to the filter case 141, the filter is inserted from the upper side toward the lower side. When the inline filter 75 is removed from the filter case 141, there is a concern that dust and other debris may fall into the interior of the filter case 141 through its opening from above and accumulate. However, by attaching the inline filter 75 to the filter case 141, any dust accumulated inside the filter case 141 is located within the filter section of the inline filter 75. Therefore, even if dust falls into the interior of the filter case 141, the dust can be reliably captured by the inline filter 75.

The inner wall of the cylindrical filter case 141 may be formed with a tapered shape such that the inner diameter thereof decreases toward the lower side. By configuring the inner wall of the cylindrical filter case 141 so that its diameter becomes smaller toward the lower side, dust that has fallen into the interior of the filter case 141 can be efficiently guided and concentrated toward the inner side of the inline filter 75.

As described above, the inline filter 75 is located in the supply water passage 7 between the first pump 76 and the drain pan 6, and the first pump 76 is located upstream of the drain pan 6 in the direction of water flow. Accordingly, the inline filter 75 is located downstream of the first pump 76 and located in the supply water passage 7. By arranging the inline filter 75 in this manner, the inline filter 75 can be used on a negative pressure side of the first pump 76. Even if the inline filter 75 becomes clogged with collected dust, by using the inline filter 75 on the negative pressure side of the first pump 76, an increase in internal pressure within the inline filter 75 due to water discharged by the first pump 76 can be prevented, thereby suppressing water leakage from the inline filter 75.

FIG. 16 is a block diagram showing the functional components of the air conditioning device 1. The air conditioning device 1 includes a circuit board 100, which contains a controller 101. The circuit board 100 is equipped with a micro-computer or the like that includes a memory, and an MPU, among other components. The micro-computer functions as the controller 101, which performs drive control of components such as the supply air fan 41, the exhaust air fan 51, the first pump 76, and the second pump 91. The memory stores a program to be executed by the controller 101.

The circuit board 100 may be arranged, for example, on the outer surface of a flow path wall that forms part of the exhaust air flow passage 5, and thermally connected to the flow path wall so that the circuit board 100 is cooled by the exhaust air flowing through the exhaust air flow passage 5. The electrical components included in the air conditioning device 1, such as the supply air fan 41, the exhaust air fan 51, the first pump 76, the second pump 91, the flow rate sensor 77, and the water level sensor 63, are communicably connected to the controller 101 provided on the circuit board 100 via communication lines.

The water level sensor 63 is, for example, a float sensor and is configured to output a water level signal to the controller 101, indicating the detected water level of the water stored in the drain pan 6. The flow rate sensor 77 is, for example, a vane-type or clamp-on type sensor. The flow rate sensor 77 outputs a flow rate signal to the controller 101, indicating the detected flow rate of water flowing through the supply water passage 7.

The controller 101 determines whether the water level in the drain pan 6 is at or below a particular value based on the water level signal received from the water level sensor 63. If the water level is determined to be at or below the particular value, the controller 101 supplies, by driving the second pump 91, replenished water from the water supply tank 8 to the water supply units, namely the filter-specific water supply unit 21 and the heat-exchange water supply unit 33. The controller 101 may be configured to stop the first pump 76 when driving the second pump 91.

The flow rate sensor 77 is located downstream of the connection point where the replenishment passage 9 from the water supply tank 8 is connected to the supply water passage 7. Accordingly, when the first pump 76 is being operated, the flow rate sensor 77 detects the flow rate of the water transported by the first pump 76, and when the second pump 91 is being operated, the flow rate sensor 77 detects the flow rate of the water transported by the second pump 91, that is, the water supplied from the water supply tank 8. By sharing the flow rate sensor 77 between the first pump 76 and the second pump 91 in this manner, the number of components in the air conditioning device 1 can be reduced, thereby contributing to weight reduction and lower manufacturing costs.

A check valve to prevent backflow of water may be arranged in the supply water passage 7 between the connection point where the supply water passage 7 and the replenishment passage 9 are connected and the first pump 76. Similarly, a check valve to prevent backflow of water may be arranged in the replenishment passage 9 between the connection point and the second pump 91. By arranging check valves between the connection point and each of the first pump 76 and the second pump 91, backflow of water discharged by the first pump 76 into the second pump 91, as well as backflow of water discharged by the second pump 91 into the first pump 76, can be prevented.

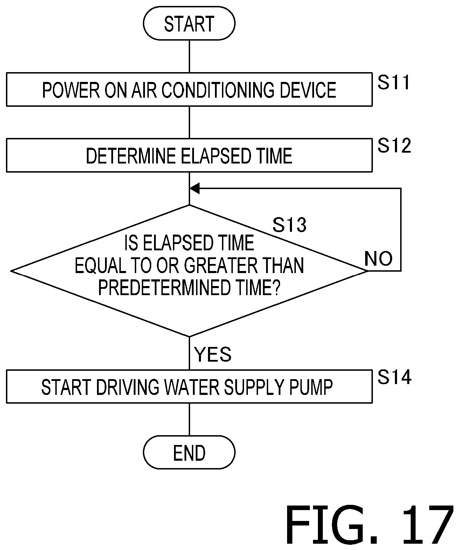

FIG. 17 is a flowchart showing a process executed by the controller 101 mounted on the circuit board 100. When the air conditioning device 1 is powered on and activated, for example, by the pressing of a startup button or the like, the controller 101 mounted on the circuit board 100 executes the following process.

The controller 101 turns on the power of the air conditioning device 1 in response to the pressing of the startup button (S11). The startup button for turning the power of the air conditioning device 1 on and off is provided on the housing 10 of the air conditioning device 1, and the power is turned on in response to the operator's operation of the startup button. Alternatively, the power on and off operation of the air conditioning device 1 may be linked to an on and off state of a key switch of the engine of the mobile vehicle, such as a forklift, on which the air conditioning device 1 is mounted.

The controller 101 determines the elapsed time since the most recent water supply before the power was turned on (S12). For example, the controller 101 may obtain a value of a residual charge in a capacitor that is charged when the water supply pump operates and discharged when the pump stops. Based on the obtained residual charge value, the controller 101 may determine the elapsed time since the most recent water supply before the power was turned on. Since the residual charge decreases according to the elapsed time after the water supply stops (i.e., after the water supply pump stops), the elapsed time can be determined or calculated based on the residual charge value. Alternatively, the controller 101 may refer to a storage unit, such as a memory included in the micro-computer or other components of the controller 101, to obtain timestamp data indicating the date and time when the most recent water supply was performed before the power was turned on. The controller 101 may have a timekeeping function and may determine the elapsed time since the most recent water supply by subtracting the obtained timestamp data from the current date and time.

The controller 101 determines whether the elapsed time is equal to or greater than a particular value (S13). The particular value used for this determination, such as 10 minutes, is stored in the memory included in the micro-computer or other components of the controller 101. By referencing the memory, the controller 101 checks whether the derived elapsed time is equal to or greater than the particular value.

If the elapsed time is less than the particular value (S13: NO), the controller 101 executes a loop process to repeatedly perform the determination in S13. By executing this loop process, the controller 101 remains in a standby state until the elapsed time since the most recent water supply before the power was turned on reaches or exceeds the particular value stored in the memory.

If the elapsed time is equal to or greater than the particular value (S13: YES), the controller 101 starts driving the water supply pump (S14). When the controller 101 starts driving the water supply pump, it may store the date and time or a timestamp of the start time as start time data in the memory. By starting the operation of the water supply pump, the controller 101 initiates water supply to the water supply units, namely the heat-exchange water supply unit 33 and the filter-specific water supply unit 21.

After starting the operation of the water supply pump, the controller 101 may stop driving the water supply pump and terminate the water supply from the water supply tank 8 when either the particular operation time is reached or the water level detected by the water level sensor 63 in the drain pan 6 reaches a particular value. When stopping the operation of the water supply pump, the controller 101 may store the date and time or timestamp of the stop time as stop time data in the memory. By storing both the start time data and the stop time data of the water supply pump in the memory, the operational history of the water supply pump can be recorded. Using this stored start time data or stop time data, the controller 101 can efficiently determine the elapsed time since the most recent water supply before the power was turned on.

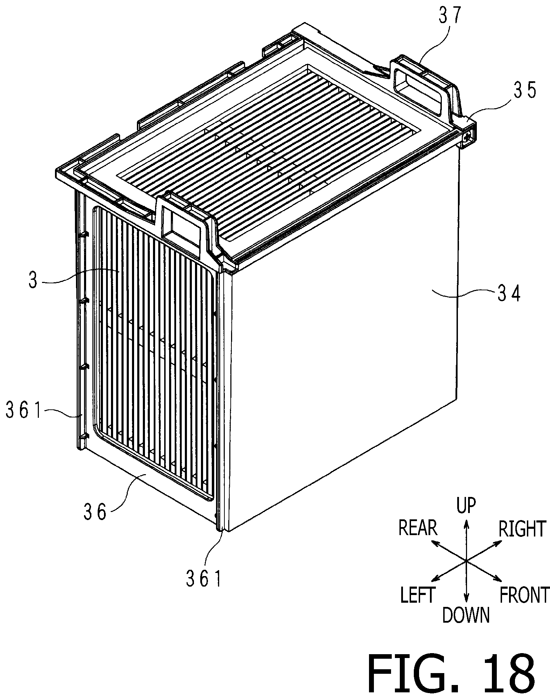

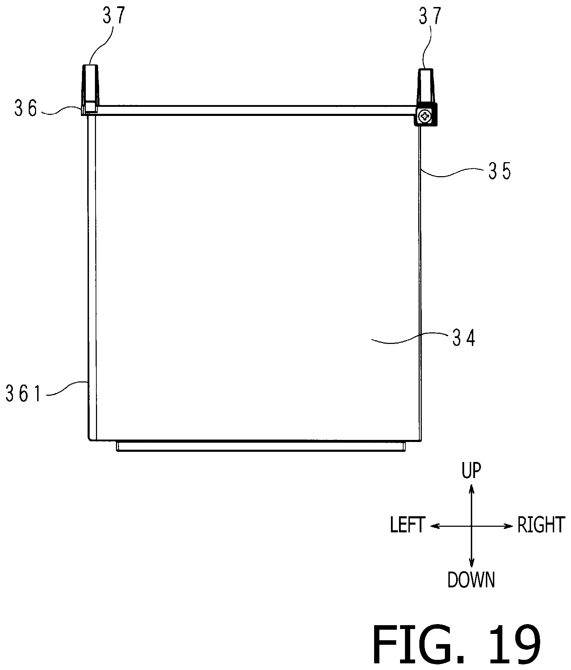

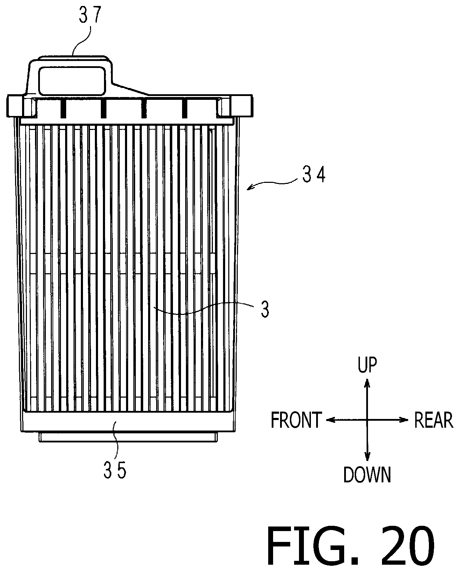

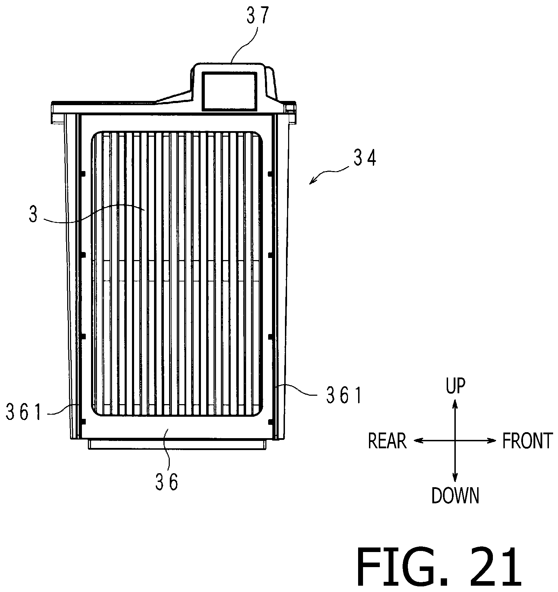

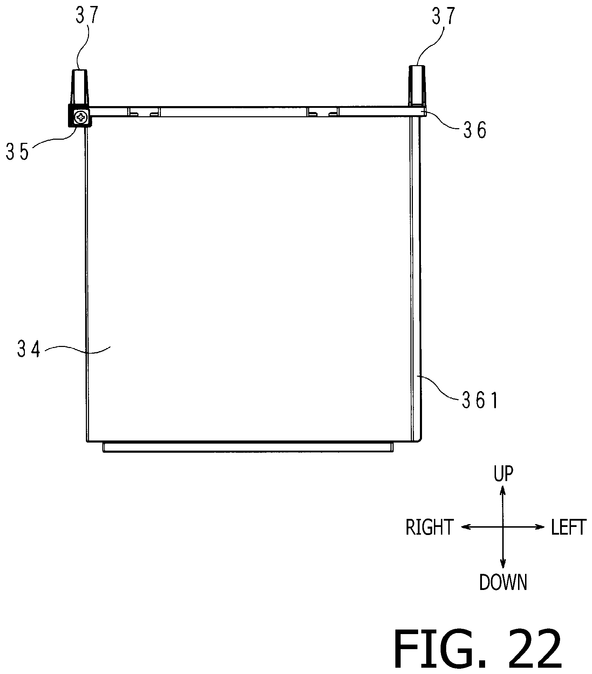

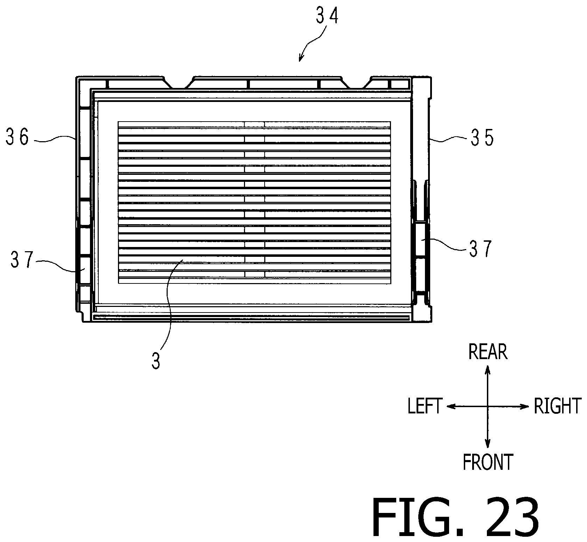

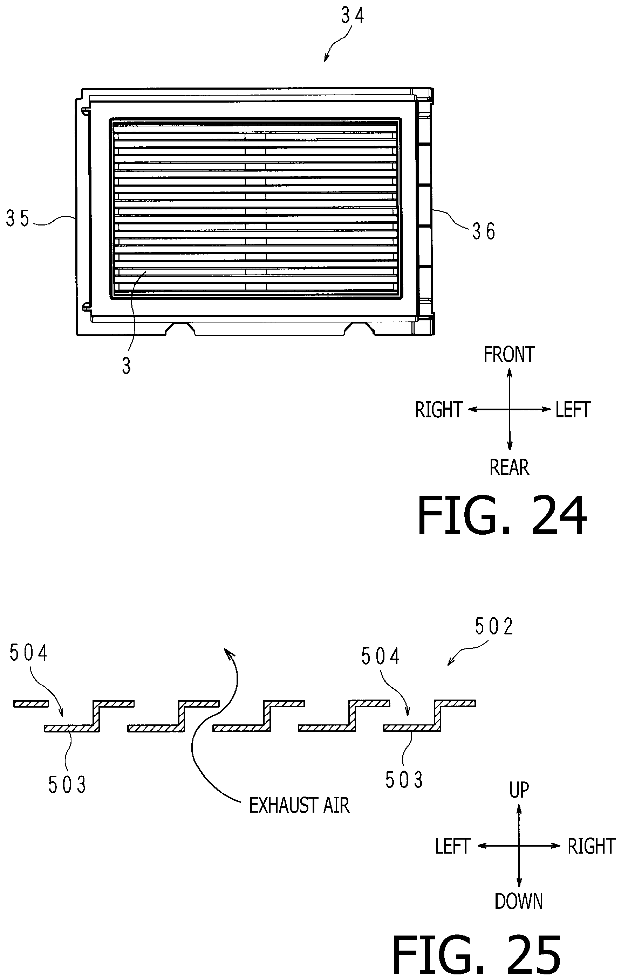

FIG. 18 is a perspective view showing the external appearance of the heat exchange case 34. FIG. 19 is a front view showing the external appearance of the heat exchange case 34. FIG. 20 is a left side view showing the external appearance of the heat exchange case 34. FIG. 21 is a right side view showing the external appearance of the heat exchange case 34. FIG. 22 is a rear view showing the external appearance of the heat exchange case 34. FIG. 23 is a plan view showing the external appearance of the heat exchange case 34. FIG. 24 is a bottom view showing the external appearance of the heat exchange case 34. In the present embodiment, the perspective view is used as a reference to indicate the front-rear, left-right, and up-down directions.

The heat exchange case 34 accommodates the sensible heat exchanger 3 and is arranged inside the housing 10 of the air conditioning device 1. When the door is opened, the heat exchange case 34 becomes exposed to the exterior of the air conditioning device 1, and the heat exchange case 34 can be pulled upward and removed from the housing 10. This configuration allows maintenance operations, such as cleaning or replacing the sensible heat exchanger 3, to be carried out efficiently.

The heat exchange case 34 includes a supply air inlet-side frame 35, which is rectangular frame-shaped, and a supply air outlet-side frame 36, which is also rectangular frame-shaped. Handle sections 37, which are to be gripped when pulling the heat exchange case 34 out from the main body 11, are formed on upper surfaces of the supply air inlet-side frame 35 and the supply air outlet-side frame 36, respectively. Each handle section 37 is configured as a rectangular frame.

A vertical rib section 361 is formed along the longitudinal direction, that is, the up-down direction in the illustration, at the peripheral edge of the supply air outlet-side frame 36, which is rectangular in shape. The vertical rib section 361 is provided only on the supply air outlet-side frame 36 and is not provided on the supply air inlet-side frame 35. With this configuration, the vertical rib section 361 serves as an anti-reverse insertion feature when inserting the heat exchange case 34 into the housing 10 of the air conditioning device 1. In the present embodiment, the vertical rib section 361 is provided only on the supply air outlet-side frame 36; however, this is not limiting. The vertical rib section 361 may instead be provided only on the supply air inlet-side frame 35 and not on the supply air outlet-side frame 36.

A notch may be formed on only one of two opposing longitudinal sections at the peripheral edge of the rectangular upper frame of the heat exchange case 34. In this case, the notch formed on the peripheral edge of the upper frame may also function as the anti-reverse insertion feature.

### First Modification

FIG. 25 is a side sectional view showing the external configuration of the suppression plate 502 according to a first modification. The suppression plate 502 of the first modification, similar to the suppression plate 502 in the first embodiment, includes multiple blade plates 503, with gap sections 504 formed between adjacent blade plates 503 to allow the passage of exhaust air.

The blade plates 503 are L-shaped in side sectional view. Each blade plate 503 extends vertically downward from the lower surface of the suppression plate 502 and then bends to extend horizontally in a direction opposite to the central portion of the drain pan 6. This bent formation creates a folded section. The section from the bent portion to the tip of the blade plate 503 is located parallel to the water surface of the water stored in the drain pan 6. The exhaust air flowing out of the drain pan 6 bypasses each blade plate 503 before passing through the gap sections 504. This configuration allows the blade plates 503 to efficiently shield and prevent water from splashing out of the drain pan 6.

### Second Modification

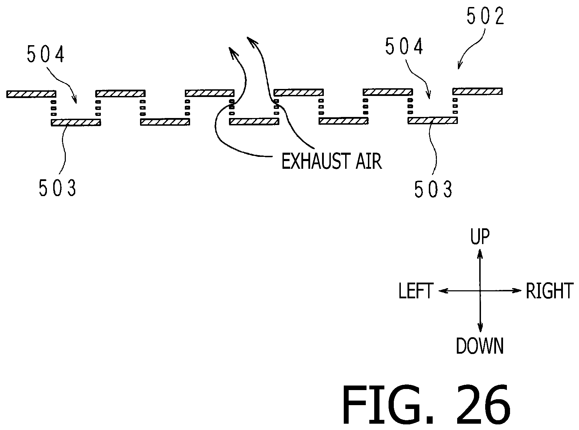

FIG. 26 is a side sectional view showing the external configuration of the suppression plate 502 according to a second modification. The suppression plate 502 of the second modification, similar to the suppression plate 502 in the first embodiment, includes multiple blade plates 503, with gap sections 504 formed between adjacent blade plates 503 to allow the passage of exhaust air.

The blade plates 503 are formed to protrude downward from the lower surface of the suppression plate 502 and have a cut-and-raised type structure. In a side sectional view, each blade plate 503 forms a U-shape, and one or more ventilation holes, which may be rectangular or circular, are formed on both left and right surfaces of the U-shaped structure. The bottom surface of each U-shaped blade plate 503 is located parallel to the surface of the water stored in the drain pan 6.

The exhaust air flowing out of the drain pan 6 first passes through the ventilation holes and then through the gap sections 504. Consequently, the exhaust air passes through both the ventilation holes and the gap sections 504, effectively preventing water from splashing out of the drain pan 6. More specifically, the bottom surface of the U-shaped blade plates 503 efficiently acts as a shield to suppress water splashing.

In the present embodiment, the air conditioning device 1 includes the sensible heat exchanger 3, which is supplied with water in the exhaust air path 321, facilitating sensible heat exchange between the supply air and the exhaust air passing through the sensible heat exchanger 3, thereby blowing out cooled supply air. The air conditioning device 1 has the supply air fan 41, which is arranged in the supply air passage 31 to convey supply air, and the exhaust air fan 51, which is arranged in the exhaust air passage 32 to convey exhaust air. When driving the exhaust air fan 51 and the supply air fan 41, the power consumption of the exhaust air fan 51 is lower than that of the supply air fan 41. Accordingly, while maintaining the cooling performance for the supply air, reducing the power consumption of the exhaust air fan 51 below that of the supply air fan 41 allows for the suppression or reduction of power consumption during the operation of the air conditioning device 1. To achieve a lower power consumption for the exhaust air fan 51 than for the supply air fan 41, the rated output of the exhaust air fan 51 may be set lower than that of the supply air fan 41. Alternatively, the exhaust air fan 51 and the supply air fan 41 may have the same rated output, for example, by being of the same model, while the duty ratio or other parameters for driving the fan motors are adjusted to apply a lower voltage to the exhaust air fan 51 than to the supply air fan 41.

In the present embodiment, the exhaust airflow volume generated by the exhaust air fan 51 is smaller than the supply airflow volume generated by the supply air fan 41. That is, the volumetric flow rate of the exhaust air conveyed by the exhaust air fan 51 is smaller than the volumetric flow rate of the supply air conveyed by the supply air fan 41. By setting this airflow volume relationship between the exhaust air fan 51 and the supply air fan 41, it is possible to control the operation of both fans in accordance with their respective power consumption levels. This allows for the suppression of power consumption while maintaining cooling performance.

In the present embodiment, the airflow-static pressure characteristics of the exhaust air fan 51 are defined as the first airflow-static pressure characteristics, while those of the supply air fan 41 are defined as the second airflow-static pressure characteristics. These airflow-static pressure characteristics may be represented, for example, in the QP characteristic diagram, which shows the relationship between airflow volume and pressure loss values. When the air conditioning device 1 operates at a rated condition specified in the product specifications, the operating points of the exhaust air fan 51 and the supply air fan 41 are determined based on the first airflow-static pressure characteristics and the second airflow-static pressure characteristics, respectively. At these operating points, the exhaust airflow volume, as determined by the airflow resistance (first airflow resistance) of the exhaust air flow passage 5, is smaller than the supply airflow volume, as determined by the airflow resistance (second airflow resistance) of the supply air flow passage 4. By setting this airflow volume relationship at the respective operating points of the exhaust air fan 51 and the supply air fan 41, the operation of both fans can be controlled in accordance with their respective power consumption levels. This enables the suppression of power consumption while maintaining cooling performance.

In the present embodiment, when increasing the rotational speed of the exhaust air fan 51 from its operating point to increase the exhaust airflow volume, the rate of increase in pressure loss is greater than when increasing the rotational speed of the supply air fan 41 to increase the supply airflow volume. That is, the rate of increase in airflow resistance (first airflow resistance) in the exhaust air flow passage 5 is greater than the rate of increase in airflow resistance (second airflow resistance) in the supply air flow passage 4. By allowing the airflow resistance of the exhaust air flow passage 5 to be greater than that of the supply air flow passage 4, the design can accommodate structural factors that increase pressure loss, such as reducing the cross-sectional area of the exhaust air flow passage 5, increasing the number of bends in the exhaust air flow passage 5, or extending the effective flow path length of the exhaust air flow passage 5. This improves the design flexibility of the exhaust air flow passage 5 within the housing 10 of the air conditioning device 1.

In the present embodiment, the air conditioning device 1, when blowing supply air into the conditioned space, has an operation mode in which the volumetric flow rate of the supply air can be changed in discrete steps, such as large, medium, and small airflow levels. Even in this case, the exhaust airflow volume generated by the exhaust air fan 51 remains smaller than any of the multiple supply airflow levels generated by the supply air fan 41, meaning that it is smaller than the minimum supply airflow volume of the supply air fan 41. As a result, power consumption can be suppressed while maintaining cooling performance.

In the present embodiment, the exhaust air flow passage 5 extends from the exhaust air intake port 52 to the exhaust air outlet port 53, while the supply air flow passage 4 extends from the supply air intake port 42 to the supply air outlet port 43. In the exhaust air flow passage 5 and the supply air flow passage 4 configured in this manner, the minimum flow path cross-sectional area of the exhaust air flow passage 5 is smaller than that of the supply air flow passage 4. As a result, the airflow resistance (first airflow resistance) of the exhaust air flow passage 5 can be made greater than the airflow resistance (second airflow resistance) of the supply air flow passage 4. The relationship between the flow path cross-sectional areas of the exhaust air flow passage 5 and the supply air flow passage 4 is not limited to their respective minimum flow path cross-sectional areas. For example, the average flow path cross-sectional area across the entire exhaust air flow passage 5 may also be smaller than the average flow path cross-sectional area across the entire supply air flow passage 4. By configuring the exhaust air flow passage 5 in this manner, the volume occupied by the exhaust air flow passage 5 within the housing 10 can be reduced, thereby contributing to the downsizing of the housing 10 and, consequently, the air conditioning device 1.

In the present embodiment, the drain pan 6, which forms part of the exhaust air flow passage 5, receives both the water that has passed through the exhaust air path 321 of the sensible heat exchanger 3 and the exhaust air flowing through. The water that flows into the drain pan 6 is received and stored therein. When the air conditioning device 1 is mounted on the mobile body such as a vehicle or forklift, and when the mobile body is traveling or under similar operating conditions, vibrations resulting from travel may cause the water surface in the drain pan 6 to become disturbed (surface turbulence), which may result in water splashing out of the drain pan 6. To address this, a flat plate-shaped return section 501 is provided above the downstream end of the drain pan 6 in the exhaust airflow direction, extending horizontally or laterally from a position near the upper edge of the drain pan 6 toward its central portion. This flat plate-shaped return section 501 is arranged so as to cover, from above, the downstream portion of the opening of the drain pan 6 in the exhaust airflow direction, thereby functioning to block water that may splash out from the opening of the drain pan 6.

In the present embodiment, water that has passed through the exhaust air paths 321 of the sensible heat exchanger 3 flows into the drain pan 6, which forms part of the exhaust air flow passage 5, and exhaust air also passes through the drain pan 6. The return section 501 is disposed between the drain pan 6 and the exhaust air outlet port 53 formed in the wall of the housing 10; in other words, it is positioned within the exhaust air flow passage 5 that is located between the drain pan 6 and the exhaust air outlet port 53. In the case where the exhaust air fan 51 is located downstream of the drain pan 6 in the direction of the exhaust airflow, the return section 501 can suppress the exhaust air fan 51 from drawing in water by blocking water from the drain pan 6. Since the return section 501 blocks water splashing out from the drain pan 6, it can also prevent such water from exiting through the exhaust air outlet port 53. Although the return section 501, which blocks water from the drain pan 6, may act as a structural factor that increases airflow resistance within the exhaust air flow passage 5, the airflow resistance of the exhaust air flow passage 5 is permitted to be greater than that of the supply air flow passage 4. Therefore, water splashing from the drain pan 6 can be suppressed while maintaining cooling performance.

In the present embodiment, at least a portion of the exhaust air fan 51 is located above the return section 501. This configuration allows the exhaust air fan 51 to be set back and offset within the housing 10 with respect to the exhaust air outlet port 53. With this arrangement, it is possible to reduce the size of the housing 10. Specifically, in the present embodiment, the length of the housing 10 in the left-right direction can be shortened, thereby contributing to the downsizing of the air conditioning device 1. Furthermore, an appropriate separation distance can be maintained between the exhaust air fan 51 and the exhaust air outlet port 53, which reduces the effect of static electricity from outside the housing 10 on the exhaust air fan 51. As a result, stable operation of the exhaust air fan 51 can be achieved.

In the present embodiment, the suppression plate 502 is arranged between the drain pan 6 and the return section 501. That is, the suppression plate 502 is located in the exhaust air flow passage 5 which is located downstream of the drain pan 6 in the direction of exhaust airflow. By arranging the return section 501 and the suppression plate 502 in series along the exhaust airflow direction within the exhaust air flow passage 5, extending from the drain pan 6 to the exhaust air outlet port 53, water splashing from the drain pan 6 and water discharge from the exhaust air outlet port 53 can be further suppressed.

In the present embodiment, the suppression plate 502 is configured in the louver shape and includes a structural member formed by, for example, multiple plates such as blade plates 503 arranged in parallel. In the suppression plate 502, which is configured as a louver, a gap section 504 is formed between each pair of adjacent blade plates 503, and exhaust air flows through these gap sections 504. That is, each of the multiple gap sections 504 formed by the louver shape constitutes part of the exhaust air flow passage 5. This configuration makes it possible to efficiently suppress water splashing from the drain pan 6 and the discharge of water from the exhaust air outlet port 53, while suppressing an increase in pressure loss within the exhaust air flow passage 5.

In the present embodiment, the suppression plate 502 is arranged to cover the flow path cross-section of the exhaust air flow passage 5 at the downstream opening of the drain pan 6. As a result, the suppression plate 502 is arranged to cover, from above, a portion of the opening of the drain pan 6 that is located on the downstream side in the direction of exhaust airflow. This configuration effectively suppresses water splashing from the drain pan 6.

In the present embodiment, the drain pan 6 forms part of the exhaust air flow passage 5, and a suppression plate 502 is located adjacent to the drain pan 6 in the exhaust air flow passage 5 defined at the downstream side section of the drain pan 6. The suppression plate 502 is arranged to cover part of the downstream opening of the drain pan 6, thereby suppressing water accumulated in the drain pan 6 from splashing outside. When the air conditioning device 1 is mounted on the mobile body such as the vehicle or forklift, vibrations during operation may cause fluctuations in the water surface of the drain pan 6 (surface turbulence), raising concerns about water splashing out of the drain pan 6. To mitigate this, by arranging the suppression plate 502 adjacent to the drain pan 6 so as to cover part of its opening, it is possible to suppress water from jumping or splashing out of the drain pan 6.

In the present embodiment, by making the blade diameter of the exhaust air fan 51 smaller than that of the supply air fan 41, the exhaust airflow volume generated by the exhaust air fan 51 can be made smaller than the supply airflow volume generated by the supply air fan 41, even if the rotational speeds of the fan motors for both the exhaust air fan 51 and the supply air fan 41 are the same. As a result, the power consumption of the exhaust air fan 51 can be reduced compared to that of the supply air fan 41, thereby suppressing or reducing the overall power consumption during the operation of the air conditioning device 1.

In the present embodiment, the sensible heat exchanger 3 is constructed by alternately stacking multiple membrane members 301 and spacers 302. As this stacked configuration is relatively simple, it allows the sensible heat exchanger 3 to be manufactured at a relatively low cost. Each spacer 302 is formed, for example, as an elongated rectangular bar and is arranged such that its longitudinal direction is parallel to the direction of airflow. In this configuration, spacers 302 that are adjacent in the stacking direction-that is, those adjacent to each other across a membrane member 301-are arranged so that one of the spacers 302 forms the supply air path 311, and the other forms the exhaust air path 321. Additionally, the adjacent spacers 302 in the stacking direction are arranged with their longitudinal directions rotated 90 degrees relative to each other. Accordingly, a crossflow is formed between the supply air path 311 and the exhaust air path 321 by a relatively simple structural arrangement.

In the present embodiment, since the rigidity of the spacer 302 is greater than that of the membrane member 301, the structural resistance to stress in the stacking direction (i.e., the direction in which the membrane members 301 and spacers 302 are stacked) is improved. As a result, deformation of the sensible heat exchanger 3 can be suppressed and resistance to shape changes of the sensible heat exchanger 3 can be improved. In other words, the spacers 302 function as reinforcing structural members, effectively suppressing deformation of the sensible heat exchanger 3.

In the present embodiment, the membrane member 301 forming the exhaust air path 321 is provided with a nonwoven fabric, and therefore, the water supplied to the exhaust air path 321 can be retained by the nonwoven fabric. With this configuration, the sensible heat exchange efficiency between the exhaust air and water passing through the exhaust air passage 32, which is composed of multiple exhaust air paths 321, is enhanced, the evaporation of water by the exhaust air can be promoted, or both of these effects may be achieved, thereby increasing the cooling efficiency of the exhaust air through the use of water.

In the present embodiment, the ends of the spacers 302 on the side where air flows in, that is, either exhaust air or supply air, are formed in a tapered shape. When two adjacent spacers 302 are placed on the same surface of a membrane member 301 so that their tapered ends face each other, an exhaust air path 321 is formed between the respective tapered ends, and this path is configured to become narrower in the direction of exhaust airflow. Similarly, in the case of the supply air paths 311, they are also formed to become narrower in the direction of supply airflow. By widening the inlet of the exhaust air paths 321 or the supply air paths 311 and gradually or stepwise reducing the cross-sectional area of the flow path along the airflow direction, pressure loss in the exhaust air paths 321 or the supply air paths 311 can be reduced.

In the present embodiment, since the air conditioning device 1 includes a cooling unit that includes the evaporation filter 2 and the sensible heat exchanger 3, the supply air can be cooled first by the exhaust air via the sensible heat exchanger 3, and then further cooled by the evaporation filter 2. By cooling the supply air in two stages in this manner, the cooling capacity of the air conditioning device 1 can be improved.

In the present embodiment, the first pump 76 supplies the water that has been stored in the drain pan 6 to the water supply units, namely the filter-specific water supply unit 21 and the heat-exchange water supply unit 33. Water that passes through the filter-specific water supply unit 21 and the heat-exchange water supply unit 33 without evaporating flows into the drain pan 6 and is stored therein. Accordingly, water can be circulated between the drain pan 6 and the water supply units by the first pump 76. Since the water circulated in this manner is cooled by latent heat during evaporation in the evaporation filter 2 or the sensible heat exchanger 3, the cooling performance of the air conditioning device 1 can be improved by circulating water at a relatively low temperature.

In the present embodiment, the controller 101 determines whether or not the water level in the drain pan 6 is at or below a particular threshold based on a water level signal obtained from the water level sensor 63. If the water level is determined to be at or below the threshold, the controller 101 drives the second pump 91 to supply replenished water from the water supply tank 8 to the water supply units, namely the filter-specific water supply unit 21 and the heat-exchange water supply unit 33. This control prevents both the depletion of water in the drain pan 6 and the overflow of water from the drain pan 6 due to excessive supply. When the controller 101 drives the second pump 91 to supply water from the water supply tank 8 to the filter-specific water supply unit 21 and the heat-exchange water supply unit 33, the controller 101 may stop the first pump 76. With this configuration, the power consumption required for driving the first pump 76 can be suppressed.

In the present embodiment, the flow rate sensor 77 is arranged in the supply water passage 7 at a position downstream of both the first pump 76 and the second pump 91, and upstream of the water supply units. As a result, the flow rate sensor 77 can detect the flow rates of the water supplied by the first pump 76 and the second pump 91, individually. By configuring a single flow rate sensor 77 to be commonly used by both the first pump 76 and the second pump 91, it becomes unnecessary to provide a separate sensor for each pump. This configuration reduces the number of components in the air conditioning device 1, thereby contributing to weight reduction and lower manufacturing costs.

In the present embodiment, the restriction structure 80 engages the water supply tank 8 with the housing 10 in a horizontal direction, which is perpendicular to the vertical direction. With this configuration, even when a load is applied in the vertical direction, detachment of the water supply tank 8 from the housing 10 can be prevented. That is, when the air conditioning device 1 is mounted on the mobile body such as a vehicle or a forklift, vertical vibrations associated with travel are expected. The restriction structure 80 is capable of preventing the water supply tank 8 from becoming detached from the housing 10 due to such vibrations.

In the present embodiment, the drainage lever 133 is configured to move such that when the drainage valve 782 is opened, the drainage lever 133 protrudes from the mounting surface 131, and when the drainage valve 782 is closed, the drainage lever 133 is located inside the mounting surface 131 of the tank base section 13. As a result, when the drain pan 6 is in a drainage state, the water supply tank 8 cannot be mounted onto the mounting surface 131 of the tank base section 13. Additionally, when the water supply tank 8 is attached to the housing 10, the drainage lever 133 is covered from above by the water supply tank 8. This prevents the operator of the air conditioning device 1 from operating the drainage lever 133 while the water supply tank 8 is attached to the housing 10.

In the present embodiment, an inline filter 75 is located in the supply water passage 7 between the first pump 76 and the drain pan 6. Accordingly, the inline filter 75 is configured to be located on a negative pressure side with respect to the first pump 76. With this configuration, even if the inline filter 75 becomes clogged due to collected dust and debris, an increase in the internal pressure of the inline filter 75 caused by water discharged from the first pump 76 can be avoided, thereby suppressing water leakage from the inline filter 75.

In the present embodiment, the filter case 141 into which the inline filter 75 is installed is arranged with its opening directed upward toward the mounting surface 131 of the housing 10. As a result, the insertion and removal direction of the inline filter 75 relative to the filter case 141 is vertical. When the inline filter 75 is removed upward from the filter case 141, there is a concern that dust and debris may fall into and accumulate inside the filter case 141. However, when the inline filter 75 is reinstalled in the filter case 141, any fallen dust or debris will be located inside the inline filter 75. Accordingly, even the dust and debris that have fallen into the filter case in this way can be reliably captured by the inline filter 75.

In the present embodiment, when the air conditioning device 1 is powered on, the controller 101 determines whether to start driving the first pump 76 based on the elapsed time since the previous water supply, namely the final water supply operation during the previous operation of the air conditioning device 1. Accordingly, when the air conditioning device 1 is powered on, the first pump 76 starts supplying water if the elapsed time since the previous water supply has exceeded a particular period, and does not start supplying water if the particular period has not yet elapsed. For example, when a control method is used in which the first pump 76 is consistently driven to start supplying water whenever the power is turned on, there is a concern that excessive water supply may occur if the elapsed time since the previous water supply is relatively short, because the evaporation filter 2 may still retain sufficient water. In addition, this may result in excessive operation of the first pump 76. In contrast, when the elapsed time since the previous water supply has not yet reached the particular threshold, the water supply is not started and the stopped state of the first pump 76 is maintained. This makes it possible to suppress excessive water supply to the evaporation filter 2, reduce the cumulative operating time of the first pump 76, lower power consumption, and extend the service life of the first pump 76.

### Additional Note

The air conditioning device 1 including the sensible heat exchanger 3 having the supply air passage 31 and the exhaust air passage 32, wherein the minimum flow path cross-sectional area of the exhaust air passage 32 is smaller than the minimum flow path cross-sectional area of the supply air passage 31.

In the sensible heat exchanger 3 having the supply air passage 31 and the exhaust air passage 32, by making the minimum flow path cross-sectional area of the exhaust air passage 32 smaller than that of the supply air passage 31, it is possible to reduce the overall size of the sensible heat exchanger 3.

The air conditioning device 1 including the sensible heat exchanger 3 having the supply air passage 31 and the exhaust air passage 32, wherein the average flow path cross-sectional area of the exhaust air passage 32 is smaller than the average flow path cross-sectional area of the supply air passage 31.

In the sensible heat exchanger 3 having the supply air passage 31 and the exhaust air passage 32, by making the average flow path cross-sectional area of the exhaust air passage 32 smaller than that of the supply air passage 31, the overall size of the sensible heat exchanger 3 can be reduced.

The sensible heat exchanger 3, constructed by alternating multiple membrane members 301 and spacers 302 stacked together, wherein the spacers 302 adjacent in the stacking direction are arranged with their longitudinal directions rotated 90 degrees relative to each other.

In the present embodiment, the sensible heat exchanger 3 is configured by stacking multiple membrane members 301 and spacers 302 alternately, and thus can be manufactured at relatively low cost. Each spacer 302 is, for example, an elongated rectangular bar and is arranged such that its longitudinal direction is parallel to the direction of air flow. Among the spacers 302 adjacent to each other in the stacking direction, that is, spacers 302 arranged with a membrane member 301 interposed therebetween, one spacer 302 forms a supply air path 311, and the other spacer 302 forms an exhaust air path 321. Since the adjacent spacers 302 in the stacking direction are arranged with their longitudinal directions rotated 90 degrees with respect to each other, a crossflow between the supply air path 311 and the exhaust air path 321 can be formed with a relatively simple structure.

The air conditioning device 1 including:
the cooling unit 20;
the water supply unit configured to supply water to the cooling unit 20;
the first pump 76 configured to supply water to the water supply unit through the supply water passage 7; and
the drain pan 6 into which water that has passed through the cooling unit 20 flows,
wherein the return section 501 that extends from an upper end of the drain pan 6 toward the central part is provided.

In the present embodiment, the return section 501 extends from the upper end of the drain pan 6 toward the central part, and the return section 501 effectively suppresses water splashing from the drain pan 6. This configuration enables the provision of an air conditioning device 1 that prevents water from splashing out of the drain pan 6.

The air conditioning device 1 including:
the cooling unit 20;
the water supply unit configured to supply water to the cooling unit 20;
the first pump 76 configured to supply water to the water supply unit through a supply water passage 7; and
the drain pan 6 into which water that has passed through the cooling unit 20 flows,
wherein the suppression plate 502 is arranged adjacent to the drain pan 6.

In the present embodiment, the suppression plate 502 is arranged adjacent to the drain pan 6, and the suppression plate 502 is configured to suppress water accumulated in the drain pan 6 from splashing outside of the drain pan 6.

With respect to the multiple claims described in the claims section, it is possible to combine them with each other regardless of the dependency format. In the claims section, it is permissible to describe multi-dependent claims that depend on multiple other claims. It is also permissible to describe multi-dependent claims that depend on other multi-dependent claims. Even in cases where multi-dependent claims depending on other multi-dependent claims are not described, such absence does not preclude the inclusion of multi-dependent claims depending on other multi-dependent claims.

The embodiments disclosed herein should be considered illustrative in all respects and not restrictive. The scope of the present invention is defined by the claims, and all modifications within the meaning and scope of the claims and equivalents are intended to be included.

### DESCRIPTION OF NUMERALS

1 - Air conditioning device
100 - Circuit board
101 - Control unit
102 - Power receiving unit
103 - Cable
10 - Housing
11 - Main body
111 - First side wall (rear side wall)
112 - Second side wall (front side wall)
1121 - Locking engagement section
1122 - Drainage port
113 - Third side wall (right side wall)
114 - Fourth side wall (left side wall)
12 - Door
13 - Tank base section
131 - Mounting surface
132 - Boss section
133 - Drainage lever
134 - Inlet pipe section
141 - Filter case
20 - Cooling unit
2 - Evaporation filter
21 - Filter water supply section (water supply section)
3 - Sensible heat exchanger
301 - Membrane member
302 - Spacer
31 - Supply air path
311 - Supply air passage
32 - Exhaust air path
321 - Exhaust air passage
33 - Heat exchange water supply section (water supply section)
34 - Heat exchange case
35 - Supply air inlet-side frame
36 - Supply air outlet-side frame
361 - Vertical rib section
37 - Handle section
4 - Supply air passage
41 - Supply air fan
42 - Supply air intake port
43 - Supply air outlet
431 - Duct
5 - Exhaust air passage
51 - Exhaust air fan
52 - Exhaust air intake port
53 - Exhaust air outlet
501 - Return section
502 - Suppression plate
503 - Blade plate
504 - Gap section
6 - Drain pan
61 - Bottom surface
611 - Bottom hole
62 - Wall surface
63 - Water level sensor
7 - Supply water passage
71 - First supply water passage
72 - Second supply water passage
73 - Connecting water passage
74 - Water supply unit connecting passage
75 - Inline filter
76 - First pump (circulation pump)
77 - Flow rate sensor
78 - Branch section
781 - Drainage passage
782 - Drainage valve
8 - Water supply tank
81 - Boss receiving section
82 - Water level confirmation window
83 - Outflow pipe section
80 - Restriction structure
801 - Handle section
802 - Lock section
803 - Slide guide section
804 - Connecting member
9 - Replenishment water passage
90 - Tank filter
91 - Second pump (tank pump)

## Claims

1. An air conditioning device, comprising:
a sensible heat exchanger having a supply air path constituting part of a supply air passage, and an exhaust air path constituting part of an exhaust air passage;
a water supply unit configured to supply water to the exhaust path of the sensible heat exchanger;
a first pump configured to supply water to the water supply unit via a supply water passage;
a supply air fan arranged in the supply air passage; and
an exhaust air fan arranged in the exhaust air passage, the exhaust air fan operates at a lower power consumption than the power consumption of the supply air fan.

2. The air conditioning device according to claim 1,
wherein an exhaust airflow volume generated by the exhaust air fan in the exhaust air passage is smaller than a supply airflow volume generated by the supply air fan in the supply air passage.

3. The air conditioning device according to claim 2,
wherein the exhaust airflow volume at an operating point determined by an airflow resistance of the exhaust air passage in an airflow-static pressure characteristic of the exhaust air fan is smaller than the supply airflow volume at an operating point determined by an airflow resistance of the supply air passage in an airflow-static pressure characteristic of the supply air fan.

4. The air conditioning device according to claim 2,
wherein the supply air fan is configured to operate at any of multiple different supply airflow volumes, and
wherein the exhaust airflow volume generated by the exhaust air fan is smaller than any of the multiple supply airflow volumes generated by the supply air fan.

5. The air conditioning device according to claim 1,
wherein a minimum flow path cross-sectional area of the exhaust air passage is smaller than a minimum flow path cross-sectional area of the supply air passage.

6. The air conditioning device according to claim 1,
further comprising a drain pan into which water having passed through the exhaust air path of the sensible heat exchanger flows,
wherein the drain pan forms a part of the exhaust air passage, and
wherein a return section extending from above an end portion of the drain pan toward a central portion thereof is disposed.

7. The air conditioning device according to claim 6,
further comprising a housing that houses the cooling unit,
wherein an exhaust air outlet port is formed in a wall of the housing,
wherein the drain pan forms a part of an exhaust air path through which exhaust air flows, and
wherein the return section is disposed between the drain pan and the exhaust air outlet port.

8. The air conditioning device according to claim 7,
further comprising an exhaust air fan configured to convey exhaust air blown out from the exhaust air outlet port,
wherein at least a part of the exhaust air fan is located above the return section.

9. The air conditioning device according to claim 1,
further comprising a drain pan into which water having passed through the exhaust air path of the sensible heat exchanger flows,
wherein the drain pan forms part of the exhaust air passage, and
wherein a suppression plate is arranged on the exhaust air passage adjacent to the drain pan.

10. The air conditioning device according to any one of claims 1 to 9,
wherein the sensible heat exchanger is configured by alternately stacking a plurality of membrane members and spacers, and
wherein adjacent spacers in the stacking direction are arranged with their longitudinal directions rotated 90 degrees relative to each other.

11. The air conditioning device according to claim 10,
wherein a nonwoven fabric is provided on a wall of the membrane member forming the exhaust air path.

12. The air conditioning device according to any one of claims 1 to 9,
further comprising an evaporation filter,
wherein the evaporation filter forms a part of the supply air passage.

13. The air conditioning device according to any one of claims 1 to 9,
further comprising a drain pan into which water having passed through the exhaust air path of the sensible heat exchanger flows,
wherein the first pump supplies the water stored in the drain pan to the water supply unit.

14. The air conditioning device according to claim 13,
further comprising a sensor configured to measure a water storage state of the drain pan, a water supply tank, and a second pump,
wherein, when the amount of water stored in the drain pan becomes less than a particular value, the second pump supplies water from the water supply tank to the water supply unit.

15. The air conditioning device according to any one of claims 1 to 9,
wherein the first pump starts water supply when a particular time has elapsed since a previous water supply at the time when power of the air conditioning device is turned on, and does not start water supply when the particular time has not elapsed.
